# EUROPEAN PATENT SPECIFICATION

(11) **EP 2 814 282 B1**
(45) Date of publication and mention of the grant of the patent: **09.11.2016**
(21) Application number: 13842610.1
(22) Date of filing: 24.09.2013
(51) Int. Cl.: H04W 76/02, H04W 4/00, H04W 28/02

(54) **METHOD FOR TRIGGERING TERMINAL AND RELEVANT DEVICE**
VERFAHREN ZUM AUSLÖSEN EINES ENDGERÄTS UND ENTSPRECHENDE VORRICHTUNG
PROCÉDÉ DE DÉCLENCHEMENT D'UN TERMINAL ET DISPOSITIF APPROPRIÉ

(30) Priority: 25.09.2012 CN 201210360808; 02.11.2012 CN 201210433189
(43) Date of publication of application: 17.12.2014
(73) Proprietor: Huawei Device Co., Ltd., Longgang District Shenzhen Guangdong 518129 (CN)
(72) Inventor: JIN, Hui, Shenzhen Guangdong 518129 (CN); XUE, Guodong, Shenzhen Guangdong 518129 (CN)
(74) Representative: Epping - Hermann - Fischer
(86) International application number: PCT/CN2013/084131
(87) International publication number: WO 2014/048309

(56) References cited:
- WO-A1-2012/100717
- WO-A1-2012/166969
- WO-A2-2011/157132
- CN-A- 101 494 848
- '3rd Generation Partnership Project; Technical Specification Group Services and System Aspects; General Packet Radio Service (GPRS); Service description; stage2 (Release 10)' 3GPP TS 23.060 V 10.4.0 June 2011, pages 27 - 30, XP050552967

## Description

### TECHNICAL FIELD

The present invention relates to the field of communications, and in particular, to a terminal triggering method and a related device.

### BACKGROUND

Currently, intelligent terminals are gradually recognized by the public and have increasing popularity. Applications on smartphones, especially some applications related to the mobile Internet, including IM (Instant Messenger), Email, SNS (Social Networking Services), and the like, need to implement communication and data exchanges with servers in real time. Currently, the industry puts forward a communications solution used when a services capability server SCS (Services Capability Server) does not maintain a connection to a terminal, where the solution is specifically: when the SCS has data to be sent to the terminal, it delivers the data in a Trigger (Trigger) manner to the terminal. In the solution, when receiving a trigger, the terminal initiates, according to content of the trigger, a data channel setup request to the services capability server (SCS) or an application server (Application Server). In this case, if a data gateway GGSN (gateway GPRS support node) or a packet data network gateway PDN GW (Packet Data Network Gateway) of the carrier is overloaded (overload), disabling the terminal to set up a data connection with the SCS or the Application Server, then, the server repeatedly sends the Trigger (Trigger) to the terminal because the server does not know that the terminal is unable to set up a data connection with the SCS or the Application Server, which therefore increases network burden.

WO 2012/100717 A1 relates to a method, system and network element for initiating active paging. The method comprises: a first network element receives a downlink data notification message sent by a serving gateway (SGW), with the downlink data notification message containing a bearer identifier, and determines whether the bearer identifier exists in the bearer context stored in the first network element; if the bearer identifier does not so exist, said network element sends a no available bearer error information corresponding to the bearer identifier to the SGW so as to prompt the SGW to send a no available bearer notification to a PDN GW, said notification being used to make the PDN GW stop sending downlink data to the serving gateway through bearer and to release the resources of the bearer; and if the bearer identifier does so exist, then said network element initiates paging.

WO 2011/157132 A1 relates to a service information transmission method. The method includes: receiving a service notification message from a service platform; if a terminal is in an idle state, then, after the terminal is switched to a connection state, notifying said terminal to obtain service information or notifying said service platform to transmit the service information to said terminal. In addition, a service information transmission device and system can avoid the transmitted service notification message from always triggering the procedure of paging the terminal, and reduce the signaling load in communication networks.

### SUMMARY

Embodiments of the present invention provide a terminal triggering method and a related device for reducing the terminal triggering burden of a network.

A first aspect provides a terminal triggering method, wherein the method is implemented by a terminal and the method includes:
receiving, from a mobility management entity, a trigger request message sent by a server to the terminal, where, the trigger request message carries application information of an application that needs to be triggered, and determining, according to the trigger request message, the need to set up a data connection with the server;
determining whether a data connection is unable to be set up with the server;
sending indicating information to the server by using the mobility management entity in a case where the terminal determines that a data connection is unable to be set up with the server, so that the server suspends sending a subsequent trigger request message to the terminal;
responding to the trigger request message in a case where the terminal determines that a data connection is able to be set up with the server;
wherein the terminal determining that a data connection is unable to be set up with the server may specifically include:
   having a case where a back off timer associated with the name of an access point is running on the terminal and the terminal needs to set up a data connection with the server, determining whether an application triggered by the trigger request message uses the access point name;
   in a case where the application triggered by the trigger request message uses the access point name, determining, by the terminal, that a data connection is unable to be set up with the server.

With reference to the first aspect, in a first possible implementation manner, after the determining that a data connection is unable to be set up with the server, the method may further include:
sending a timer and an application list of an application that uses the access point name and are in the terminal to the server;
alternatively, sending only the timer to the server.

With reference to the first possible implementation manner of the first aspect, in a second possible implementation manner, the timer is the back off timer, or the timer is generated according to the back off timer.

A second aspect provides a terminal triggering method, wherein the method is implemented by a network device and the method comprises:
receiving from a machine type communications-inter working function entity, a trigger request message sent by a server to a terminal, where the trigger request message carries application information of an application that needs to be triggered;
determining whether the terminal is unable to set up a data connection with the server;
in a case where the terminal is unable to set up a data connection with the server, sending indicating information to the server, so that the server suspends sending a subsequent trigger request message to the terminal;
in a case where the terminal is able to set up a data connection with the server the mobility , responding to the trigger request message and forwarding the trigger request message to the terminal;
wherein determining whether the terminal is unable to set up a data connection with the server includes:
   having a case where a back off timer associated with the name of an access point is running on a mobility management entity and the mobility management entity determines that the terminal needs to set up a data connection with the server, determining whether the application triggered by the trigger request message uses the access point name;
   in a case where the application triggered by the trigger request message uses the access point nam , determining, by the mobility management entity, that the terminal is unable to set up a data connection with the server.

With reference to the second aspect, in a first possible implementation manner, after the determining that a data connection is unable to be set up with the server, the method may further include:
sending a timer and an application list of an application that uses the access point name and are in the terminal to the server;
alternatively, sending only the timer to the server.

A third aspect provides a terminal triggering method, which may include:
sending, by a server, a trigger request message to a terminal;
receiving, by the server, indicating information sent by a network device or the terminal, learning, according to the indicating information, that the terminal is unable to complete an operation requested by the trigger request message, and stopping sending a subsequent trigger request message to the terminal;

In a first possible implementation manner, the indicating information includes: indicating information that indicates data gateway overload, indicating information that indicates that an access point name is congested, indicating information that indicates that the terminal is unable to set up a data connection with the server, or indicating information that indicates that a data connection is unable to be set up because of access point name congestion.

With reference to the third aspect, in a second possible implementation manner, after the sending, by a server, a trigger request message to the terminal, the method may further include:
receiving a timer and an application list, sent by the terminal or the network device, of an application that uses an access point name and are in the terminal, where, a back off timer associated with the access point name is running on the terminal or the network device; and
the stopping, by the server, sending a subsequent trigger request message to the terminal is specifically: before the timer expires, sending, by the server, no subsequent trigger request message that triggers an application in the application list to the terminal.

With reference to the third aspect, in a third possible implementation manner, after the sending, by a server, a trigger request message to the terminal, the method may further include:
receiving a timer sent by the terminal or the network device; and
the stopping, by the server, sending a subsequent trigger request message to the terminal may specifically be:
   before the timer expires, sending, by the server, no trigger request message same as the trigger request message to the terminal; or before the timer expires, sending, by the server, no subsequent trigger request message to the terminal; or before the timer expires, sending, by the server, no specified trigger request message to the terminal, where an application triggered by the specified trigger request message is the application triggered by the trigger request message sent to the terminal.

With reference to the third aspect, or the first, second, or third possible implementation manner of the third aspect, in a fourth possible implementation manner, the network device is specifically either a machine type communications-inter working function entity or a mobility management entity.

A fourth aspect provides a terminal, which includes modules for implementing the method according to the first aspect, the first possible implementation manner of the first aspect or the second possible implementation of the first aspect.

A fifth aspect provides a network server, which may include includes modules for implementing the method according to the second aspect, the first possible implementation manner of the second aspect or the second possible implementation of the second aspect.

A sixth aspect provides a server, which may include:
a sender, configured to send a trigger request message to a terminal;
a receiver, configured to receive indicating information sent by a network device or the terminal;
a processor, configured to learn, according to the indicating information, that the terminal is unable to complete an operation requested by the trigger request message, and instruct the sender; where:
   the sender is further configured to stop, according to the notification of the processor, sending a subsequent trigger request message to the terminal.

With reference to the sixth aspect, in a first possible implementation manner, the indicating information includes: indicating information that indicates data gateway overload, indicating information that indicates that an access point name is congested, indicating information that indicates that the terminal is unable to set up a data connection with the server, or indicating information that indicates that a data connection is unable to be set up because of access point name congestion.

With reference to the sixth aspect, in a second possible implementation manner,
the receiver may further be configured to, after the server sends a trigger request message to the terminal, receive a timer and an application list, sent by the terminal or the network device, of an application that uses an access point name and are in the terminal, where, a back off timer associated with the access point name is running on the terminal or the network device; and
the processor may specifically be configured to, before the timer expires, instruct the sender not to send a subsequent trigger request message that triggers an application in the application list to the terminal.

With reference to the sixth aspect, in a third possible implementation manner, the receiver may further be configured to, after the server sends a trigger request message to the terminal, receive the timer sent by the terminal or the network device; and
the processor may specifically be configured to, before the timer expires, instruct the sender not to send a trigger request message same as the trigger request message to the terminal; or before the timer expires, instruct the sender not to send a subsequent trigger request message to the terminal; or before the timer expires, instruct the sender not to send a specified trigger request message to the terminal, where, an application triggered by the specified trigger request message is the application triggered by the trigger request message sent to the terminal.

The foregoing shows that, in some feasible implementation manners of the present invention, when receiving a trigger request message sent by a server, a network device or a terminal determines, according to the trigger request message, the need to set up a data connection with a server, and sends indicating information to the server when it is determined that the terminal is unable to set up a data connection with the server, and when receiving the indicating information sent by the network device or the terminal, the server suspends sending a subsequent trigger request message to the terminal. This rectifies a defect of the prior art, according to which when a terminal is unable to set up a data connection with a server, the server repeatedly sends a trigger request message to the terminal, increasing a network burden.

### BRIEF DESCRIPTION OF DRAWINGS

FIG. 1 is a schematic flowchart of a first embodiment of a terminal triggering method on a network device side according to the present invention;
FIG. 2 is a schematic flowchart of a second embodiment of a terminal triggering method on a network device side according to the present invention;
FIG. 3 is a schematic flowchart of a first embodiment of a terminal triggering method according to the present invention;
FIG. 4 is a schematic flowchart of a first embodiment of a terminal triggering method on a server side according to the present invention;
FIG. 5 is a schematic flowchart of a second embodiment of a terminal triggering method on a server side according to the present invention;
FIG. 6 is a schematic flowchart of a third embodiment of a terminal triggering method on a server side according to the present invention;
FIG. 7 is a schematic structural composition diagram of a first embodiment of a network device according to the present invention;
FIG. 8 is a schematic structural composition diagram of a first embodiment of a terminal according to the present invention;
FIG. 9 is a schematic structural composition diagram of a first embodiment of a server according to the present invention;
FIG. 10 is a schematic structural composition diagram of a second embodiment of a network device according to the present invention;
FIG. 11 is a schematic structural composition diagram of a second embodiment of a terminal according to the present invention;
FIG. 12 is a schematic structural composition diagram of a second embodiment of a server according to the present invention;
FIG. 13A and FIG. 13B are a schematic flowchart of implementing an embodiment of the present invention in a data bearer setup process;
FIG. 14A and FIG. 14B are a schematic flowchart of implementing an embodiment of the present invention in a process of continuously sending a trigger;
FIG. 15A and FIG. 15B are a schematic flowchart of implementing an embodiment of the present invention in a process of continuously sending a trigger; and
FIG. 16A and FIG. 16B are a schematic flowchart of implementing an embodiment of the present invention in a process of continuously sending a trigger.

### DESCRIPTION OF EMBODIMENTS

To make the objectives, technical solutions, and advantages of the present invention more comprehensible, the following further describes the present invention in detail with reference to the accompanying drawings.

The present invention provides a terminal triggering method, where, the method may be embodied on three sides of a network device, a terminal, and a server.

When it is embodied on the network device side, the method may include:
receiving, by the network device, a trigger request message sent by a server to a terminal, and determining, according to the trigger request message, that the terminal needs to set up a data connection with the server;
sending indicating information to the server when the network device determines that the terminal is unable to set up a data connection with the server, so that the server suspends sending a subsequent trigger request message to the terminal.

In some feasible implementation manners, the determining, by the network device, that the terminal is unable to set up a data connection with the server specifically include:
if a back off timer associated with the name of an access point is running on the network device when the network device determines that the terminal needs to set up a data connection with the server, determining, by the network device, whether an application triggered by the trigger request message is included in an application list corresponding to the access point name; if yes, determining, by the network device, that the terminal is unable to set up a data connection with the server;
alternatively,
if a back off timer associated with the name of an access point is running on the network device when the network device determines that the terminal needs to set up a data connection with the server, determining, by the network device, whether an application triggered by the trigger request message uses the access point name; if yes, determining, by the network device, that the terminal is unable to set up a data connection with the server.

In some feasible implementation manners, the network device is specifically a mobility management entity, the application list is sent by the terminal to the mobility management entity, and the back off timer is sent by the terminal or the data gateway to the mobility management entity; or,
the network device is specifically a machine type communications-inter working function entity, the application list is sent by the terminal to the machine type communications-inter working function entity through a mobility management entity, and the back off timer is sent by the terminal through the mobility management entity to the machine type communications-inter working function entity, or is sent by the data gateway to the machine type communications-inter working function entity.

In some feasible implementation manners, the indicating information includes: indicating information that indicates data gateway overload, indicating information that indicates that an access point name is congested, indicating information that indicates that the terminal is unable to set up a data connection with the server, or indicating information that indicates that a data connection is unable to be set up because of access point name congestion.

In some feasible implementation manners, after the determining, by the network device, that a data connection is unable to be set up with the server, the method further includes:
sending, by the network device, a timer and an application list of an application that uses the access point name and are in the terminal to the server;
alternatively, sending, by the network device, the timer to the server.

In some feasible implementation manners, the timer is the back off timer, or the timer is generated according to the back off timer.

When it is embodied on the terminal side, the method may include:
receiving, by a terminal, a trigger request message sent by a server to the terminal, and determining, according to the trigger request message, the need to set up a data connection with the server;
sending, indicating information to the server when the terminal determines that a data connection is unable to be set up with the server, so that the server suspends sending a subsequent trigger request message to the terminal.

In some feasible implementation manners, the terminal determining that a data connection is unable to be set up with the server may specifically include: if a back off timer associated with the name of an access point is running on the terminal when the terminal needs to set up a data connection with the server,
determining, by the terminal, whether an application triggered by the trigger request message uses the access point name; if yes, determining, by the terminal, that a data connection is unable to be set up with the server.

In some feasible implementation manners, the terminal determining that a data connection is unable to be set up with the server may specifically include:
if no back off timer is running on the terminal when the terminal needs to set up a data connection with the server,
determining, by the terminal, whether a back off timer is received when the access point name used by the application triggered by the trigger request message is used to initiate a request for setting up a data connection to a data gateway;
if yes, determining, by the terminal, that a data connection is unable to be set up with the server.

In some feasible implementation manners, the indicating information includes: indicating information that indicates data gateway overload, indicating information that indicates that an access point name is congested, indicating information that indicates that the terminal is unable to set up a data connection with the server, or indicating information that indicates that a data connection is unable to be set up because of access point name congestion.

In some feasible implementation manners, after the determining, by the terminal, that a data connection is unable to be set up with the server, the method may further include: sending, by the terminal, a timer and an application list of an application that uses the access point name and are in the terminal to the server; or sending, by the terminal, the timer to the server.

In some feasible implementation manners, the timer is the back off timer, or the timer is generated according to the back off timer.

It can be learned from the above that, when receiving a trigger request message sent by a server, a network device or a terminal determines, according to the trigger request message, the need to set up a data connection with a server, and when it is determined that the terminal is unable to set up a data connection with the server, sends indicating information to the server, so that the server suspends sending a subsequent trigger request message to the terminal. This rectifies a defect of the prior art, according to which when a terminal is unable to set up a data connection with a server, the server repeatedly sends a trigger request message to the terminal, increasing a network burden.

When it is embodied on the server side, the method may include:
sending, by a server, a trigger request message to a terminal;
receiving, by the server, indicating information sent by a network device or the terminal, learning, according to the indicating information, that the terminal is unable to complete an operation requested by the trigger request message, and stopping sending a subsequent trigger request message to the terminal.

In some feasible implementation manners, the indicating information includes: indicating information that indicates data gateway overload, indicating information that indicates that an access point name is congested, indicating information that indicates that the terminal is unable to set up a data connection with the server, or indicating information that indicates that a data connection is unable to be set up because of access point name congestion.

In some feasible implementation manners, after the sending, by a server, a trigger request message to the terminal, the method may further include: receiving a timer and an application list, sent by the terminal or the network device, of an application that uses an access point name and are in the terminal, where, a back off timer associated with the access point name is running on the terminal or the network device; and
the stopping, by the server, sending a subsequent trigger request message to the terminal is specifically: before the timer expires, sending, by the server to the terminal, no subsequent trigger request message that triggers an application in the application list.

In some feasible implementation manners, after the sending, by a server, a trigger request message to the terminal, the method may further include: receiving a timer sent by the terminal or the network device;

The stopping, by the server stopping, sending a subsequent trigger request message to the terminal is specifically: before the timer expires, sending, by the server, no trigger request message same as the trigger request message to the terminal; or before the timer expires, sending, by the server, no subsequent trigger request message to the terminal; or before the timer expires, sending, by the server, no specified trigger request message to the terminal, where an application triggered by the specified trigger request message is the application triggered by the trigger request message sent to the terminal.

In some feasible implementation manners, the network device is specifically either a machine type communications-inter working function entity or a mobility management entity.

The foregoing shows that, when receiving indicating information sent by a network device or terminal, a server suspends sending a subsequent trigger request message to the terminal. This rectifies a defect of the prior art, according to which when a terminal is unable to set up a data connection with a server, the server repeatedly sends a trigger request message to the terminal, increasing a network burden.

In the foregoing methods, the network devices may include a mobility management entity (Mobility Management Entity, MME), a machine type communications-inter working function entity (Machine Type Communications-Interworking Function, MTC-IWF), and the like. The servers may include a services capability server (Services Capability Server, SCS), an application server (Application Server, AS), and the like. The data gateways may include a gateway GSN (Gateway GSN, GGSN), a packet data network gateway (PDN GW), and the like. The application lists are used to indicate one or more applications and may include index information or content information of one or more application programs, For example, the information may be an ID list of application programs (Application ID list), a name list of application programs (Application name list), or specific content of an application program.

The indicating information is used by the terminal or the network device to report to a server that a trigger request is unable to be completed. When a network device is a mobility management entity, the mobility management entity may also report the indicating information to a machine type communications-inter working function entity. The indicating information includes: indicating information that indicates data gateway overload, indicating information that indicates that an access point name is congested, indicating information that indicates that the terminal is unable to set up a data connection with the server, or indicating information that indicates that a data connection is unable to be set up because of access point name congestion. The indicating information at least includes one the foregoing descriptions, and may further include other information. When the server triggers the terminal to set up a data connection with the server so as to acquire uplink data of the terminal or send downlink data to the terminal, the indicating information about the terminal being unable to set up the data connection with the server may be further understood as that the terminal is unable to send uplink data or the terminal is unable to receive downlink data.

When the indicating information is sent by the terminal or the network device to a server, the indicating information may be sent by using a trigger response message or sent by using another message (for example, a report message or a delivery report delivery report).

The back off time (back off timer) is assigned to an access point name because a data gateway is in an overload (overload) state when a terminal uses the access point name (APN) to initiate a data connection request to the data gateway. The back off timer is sent to the terminal through a mobility management entity, so that before the back off timer expires, the terminal no longer uses the access point name to initiate data connection setup requests.

The timer is generated by a terminal or network device according to the back off timer, where, specifically, a timer is generated according to the remaining time of the back off timer, or the time of the current back off timer is adjusted and the adjusted back off timer is copied to generate a timer; or the timer is the back off timer. The timer may be configured to restrict a server, before the timer expires, from sending a trigger request message to a terminal. When the timer is generated by a terminal, the timer is sent through a mobility management entity and a machine type communications-inter working function entity to a server; when the timer is generated by a mobility management entity, the timer is sent by a machine type communications-inter working function entity to a server.

With reference to the accompanying drawings, the following provides examples to describe the embodiments of the terminal triggering method according to the present invention.

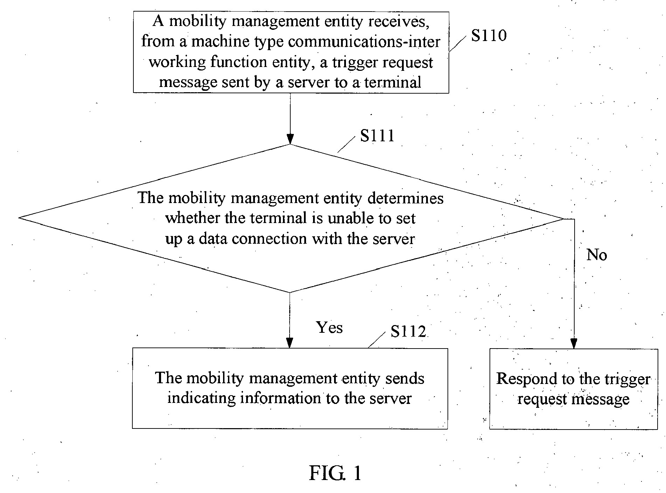

FIG. 1 is a schematic flowchart of a first embodiment of a terminal triggering method on the network device side according to the present invention. As shown in FIG. 1, the terminal triggering method on the network device side according to the present invention may include:
Step S110. A mobility management entity receives, from a machine type communications-inter working function entity, a trigger request message sent by a server to a terminal, where, the trigger request message carries application information of an application that needs to be triggered.
Step S111. The mobility management entity determines whether the terminal is unable to set up a data connection with the server; if yes, the mobility management entity determines that the terminal is unable to set up a data connection with the server and step S 112 is executed; otherwise, the mobility management entity responds to the trigger request message and forwards the trigger request message to the terminal.

Herein, a specific process in which the mobility management entity determines whether the terminal is unable to set up a data connection with the server may include:
if a back off timer associated with the name of an access point is running on a mobility management entity when the mobility management entity determines that the terminal needs to set up a data connection with the server, determining, by the mobility management entity, whether an application triggered by the trigger request message is included in an application list corresponding to the access point name; if yes, determining, by the mobility management entity, that the terminal is unable to set up a data connection with the server;
alternatively,
if a back off timer associated with the name of an access point is running on a mobility management entity when the mobility management entity determines that the terminal needs to set up a data connection with the server, determining, by the mobility management entity, whether an application triggered by the trigger request message uses the access point name; if yes, determining, by the mobility management entity, that the terminal is unable to set up a data connection with the server,
where, determining whether the application triggered by the trigger request message uses the access point name is to determine whether the access point name used by the application triggered by the trigger request message is in a congested state. When the back off timer associated with the access point name is running, it is determined that the access point name is in a congested state. The access point name being in the congested state may further be understood as that the back off timer associated with the access point name is running. Whether the application triggered by the trigger request message uses the access point name may further be understood as whether the application triggered in the terminal uses the access point name (APN) when a data connection is set up.

Step S112. The mobility management entity sends indicating information to the server, so that the server suspends sending a subsequent trigger request message to the terminal. In some feasible implementation manners, the trigger request message in step S110 may, in addition to carrying application information of the application that needs to be triggered, further carry other information that may be carried by a trigger request message, such as indicating information about when a data connection request should be sent to an application server or a server corresponding to the application.

In some feasible implementation manners, the application list (which is marked, for example, as App List) may be acquired by the mobility management entity from a terminal in a process in which the terminal initiates a data bearer setup (PDN connectivity request) to the network side. For example, in a process of setting up a data bearer, when determining that a data gateway (for example, a GGSN or a PDN GW) is overloaded or an APN is in the congested (congested) state, a terminal collects a list of an application that uses the APN and sends a non-access stratum (Non-Access Stratum, NAS) message to a mobility management entity, where, the NAS message carries the application list. In this way, the mobility management entity acquires the application list by receiving the NAS message from the terminal. Similarly, the back off timer (marked as, for example, back off timer) may be acquired from the data gateway or acquired from the terminal by the mobility management entity in a process in which the terminal initiates a data bearer setup to the network side. For example, in a process of setting up a data bearer, when determining that a data gateway (for example, a GGSN or a PDN GW) is overloaded or an APN is in the congested (congested) state, a terminal receives a data bearer setup response message (PDN Connectivity Response) from the data gateway, where, the data bearer setup response message carries a back off timer, and then the terminal may carry a back off timer when sending a NAS message to a mobility management entity. In this way, the mobility management entity may acquire the back off timer by receiving the NAS message from the terminal. Alternatively, when a GGSN or a PDN GW is overloaded (overload) or an APN is in the congested (congested) state, a communications message between the terminal and the mobility management entity may be directly used to instruct the back off timer to the mobility management entity.

In some feasible implementation manners, the application list is acquired by the mobility management entity from the terminal when the terminal receives a trigger request message sent by the server before sending the trigger request message. For example, when acquiring, before sending a trigger request message, a trigger (trigger) sent by a server, a terminal determines whether the back off timer corresponding to the application accessed by the terminal based on an access point name is still running; if yes, it indicates that the data gateway (for example, a GGSN or a PDN GW) is in the overload (overload) state or the APN is in the congested (congested) state. In this case, the terminal may collect a list of applications and send a non-access stratum (Non-Access Stratum, NAS) message to a mobility management entity, where, the NAS message carries the application list. In this way, the mobility management entity acquires the application list by receiving the NAS message from the terminal. Similarly, the back off timer is acquired by the mobility management entity from the terminal when the terminal receives a trigger request message sent by the server before sending the trigger request message. For example, when acquiring, before sending a trigger request message, a trigger (trigger) sent by a server, a terminal determines whether the back off timer corresponding to the application accessed by the terminal based on an access point name is still running; if yes, it indicates that the data gateway (for example, a GGSN or a PDN GW) is in the overload (overload) state or the APN is in the congested (congested) state. In this case, the terminal may send a non-access stratum (Non-Access Stratum, NAS) message to a mobility management entity, where, the NAS message carries the back off timer. In this way, the mobility management entity acquires the back off timer by receiving the NAS message from the terminal.

In some feasible implementation manners, before or after step S112, a mobile management entity may further send the application list and the timer to the server, and the server does not send, before the timer expires, a subsequent trigger request message for triggering an application in the application list to the terminal. Alternatively, before or after step S112, a mobility management entity may further send only a timer to the server, and before the timer expires, the server does not send a trigger request message same as the trigger request message to the terminal; or before the timer expires, the server does not send a subsequent trigger request message to the terminal; or before the timer expires, the server does not send a specified trigger request message to the terminal, where, an application triggered by the specified trigger request message is the application triggered by the trigger request message sent to the terminal.

The foregoing indicating information may be sent by using a trigger response message or sent by using another message. For example, a mobility management entity may send indicating information by using a delivery report message (Delivery Report) to the server. In this case, the delivery report message may further carry the application list and timer. The delivery report message is sent by using a machine type communications-inter working function entity to the server.

The indicating information includes: indicating information that indicates data gateway overload, indicating information that indicates that an access point name is congested, indicating information that indicates that the terminal is unable to set up a data connection with the server, or indicating information that indicates that a data connection is unable to be set up because of access point name congestion.

The timer is the back off timer stored by the mobility management entity in step S111; alternatively, the timer is generated according to the back off timer stored by the mobility management entity in step S111. The timer generation process may specifically be: a timer is generated according to the remaining time of the back off timer stored by the mobility management entity in step S111, or the time of the back off timer stored by the mobility management entity in step S111 is adjusted and the adjusted back off timer is copied to generate a timer, or the like.

In some feasible implementation manners, indicating information used to indicate data gateway overload, indicating information used to indicate that an access point name corresponding to the server is congested (for example, indicating that a GGSN or a PDN GW is overloaded or an APN is in the congested (congested) state), indicating information that indicates that the terminal is unable to set up a data connection with the server, or indicating information that indicates that a data connection is unable to be set up because of access point name congestion may also be acquired from the data gateway or from the terminal by the mobility management entity in a process in which the terminal initiates a data bearer setup to the network side. For example, in the data bearer setup process, when determining that a data gateway (for example, a GGSN or a PDN GW) is overloaded or an APN is in the congested (congested) state, a terminal receives a data bearer setup response message (PDN Connectivity Response) from the data gateway, where, the data bearer response message carries indication information of data gateway overload, indication information that the access point name corresponding to the server is congested, the indicating information that indicates that the terminal is unable to set up a data connection with the server, or the indicating information that indicates that a data connection is unable to be set up because of access point name congestion. Subsequently, the terminal may carry, when sending a NAS message to a mobility management entity, the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion. In this way, the mobility management entity may acquire, by receiving the NAS message from the terminal, the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion. Alternatively, when a GGSN or a PDN GW is overloaded (overload) or an APN is in the congested (congested) state, a communications message between the terminal and the mobility management entity may be directly used to instruct the mobility management entity of the indicating information that indicates data gateway overload, the indicating information about the APN being congested (congested), the indicating information that indicates that the terminal is unable to set up a data connection with the server, or the indicating information that indicates that a data connection is unable to be set up because of access point name congestion. Alternatively, the indicating information may be generated by the mobility management entity according to an application list sent by the terminal.

In some feasible implementation manners, the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion is acquired from the terminal by the mobility management entity when the terminal receives a trigger request message sent by the server before sending the trigger request message. For example, when acquiring, before sending a trigger request message, a trigger (trigger) sent by a server, a terminal determines whether the back off timer corresponding to the application accessed by the terminal based on an access point name is running; if yes, it indicates that the data gateway (for example, a GGSN or a PDN GW) is in the overload (overload) state or the APN is in the congested (congested) state. In this case, the terminal may send a non-access stratum (Non-Access Stratum, NAS) message to a mobility management entity, where, the NAS message carries the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion. In this way, the mobility management entity acquires, by receiving the NAS message from the terminal, the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion.

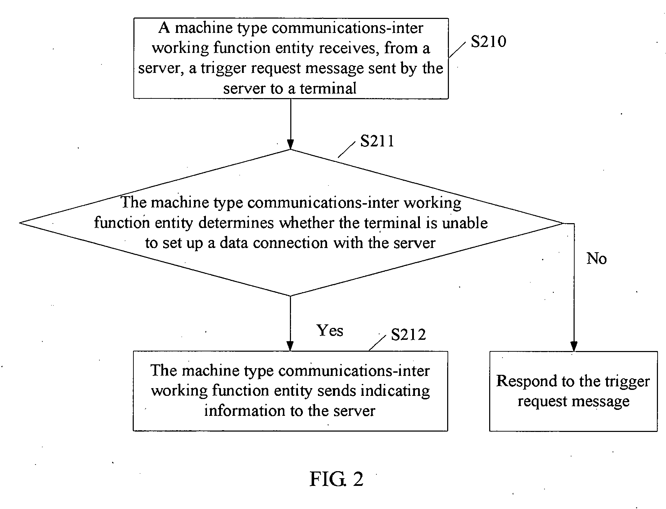

FIG. 2 is a schematic flowchart of a second embodiment of a terminal triggering method on the network device side according to the present invention. As shown in FIG. 2, the method for responding to terminal triggering on the network device side according to the present invention may include:
Step S210. A machine type communications-inter working function entity receives, from a server, a trigger request message sent by the server to a terminal, where, the trigger request message carries application information of the application that is needed.
Step S211. The machine type communications-inter working function entity determines whether the terminal is unable to set up a data connection with the server; if yes, the machine type communications-inter working function entity determines that the terminal is unable to set up a data connection with the server and step S 112 is executed; otherwise, the machine type communications-inter working function entity responds to the trigger request message and forwards the trigger request message to the terminal.

Herein, a specific process in which the machine type communications-inter working function entity determines whether the terminal is unable to set up a data connection with the server may include:
if a back off timer associated with the name of an access point is running on the machine type communications-inter working function entity when the machine type communications-inter working function entity determines that the terminal needs to set up a data connection with the server, determining, by the machine type communications-inter working function entity, whether an application triggered by the trigger request message is included in an application list corresponding to the access point name; if yes, determining, by the machine type communications-inter working function entity, that the terminal is unable to set up a data connection with the server;
alternatively,
if a back off timer associated with the name of an access point is running on the machine type communications-inter working function entity when the machine type communications-inter working function entity determines that the terminal needs to set up a data connection with the server, determining, by the machine type communications-inter working function entity, whether an application triggered by the trigger request message uses the access point name; if yes, determining, by the machine type communications-inter working function entity, that the terminal is unable to set up a data connection with the server,
where, determining whether the application triggered by the trigger request message uses the access point name is to determine whether the access point name used by the application triggered by the trigger request message is in a congested state.

Step S212. The machine type communications-inter working function entity sends indicating information to the server, so that the server suspends sending a subsequent trigger request message to the terminal.

In some feasible implementation manners, the trigger request message in step S210 may, in addition to carrying application information of the application that needs to be triggered, further carry other information that may be carried by a trigger request message, such as indicating information about when the terminal should send a connection request to an application server or a server corresponding to the application.

In some feasible implementation manners, the application list may be acquired by the machine type communications-inter working function entity from the terminal in a process in which the terminal initiates a data bearer setup to the network side. For example, in a process of setting up a data bearer, when determining that a data gateway (for example, a GGSN or a PDN GW) is overloaded or an APN is in the congested (congested) state, a terminal collects a list of applications and sends a non-access stratum (Non-Access Stratum, NAS) message to a mobility management entity, where, the NAS message carries the application list. Subsequently, the mobility management entity acquires the application list by receiving the NAS message from the terminal. Subsequently, the mobility management entity may send, by using an inform (inform) message, the application list it acquires to a machine type communications-inter working function entity. Similarly, the back off timer may be acquired from the data gateway, acquired from the mobility management entity, or acquired from the terminal through the mobility management entity by the machine type communications-inter working function entity in a process in which the terminal initiates a data bearer setup to the network side. For example, in a process of setting up a data bearer, when determining that a data gateway (for example, a GGSN or a PDN GW) is overloaded or an APN is in the congested (congested) state, a terminal receives a data bearer setup response message (PDN Connectivity Response) from the data gateway, where, the data bearer response message carries a back off timer. Subsequently, the terminal may carry the back off timer when sending the NAS message to a mobility management entity. In this way, the mobility management entity may acquire, by receiving the NAS message from the terminal, the back off timer. Subsequently, the mobility management entity may send, by using an inform (inform) message, the acquired back off timer to a machine type communications-inter working function entity. Alternatively, when a GGSN or a PDN GW is overloaded (overload) or an APN is in the congested (congested) state, a communications message between the terminal and the mobility management entity may be directly used to instruct the back off timer to the machine type communications-inter working function entity.

In some feasible implementation manners, the application list according to the present invention is acquired from the mobility management entity or acquired through the mobility management entity from the terminal by the machine type communications-inter working function when the terminal receives a trigger request message sent by the server before sending the trigger request message. For example, when acquiring, before sending a trigger request message, a trigger (trigger) sent by a server, a terminal determines whether the back off timer corresponding to the application accessed by the terminal based on an access point name is still running; if yes, it indicates that the data gateway (for example, a GGSN or a PDN GW) is in the overload (overload) state or the APN is in the congested (congested) state. In this case, the terminal may collect a list of applications and send a non-access stratum (Non-Access Stratum, NAS) message to a mobility management entity, where, the NAS message carries the application list. In this way, the mobility management entity acquires the application list by receiving the NAS message from the terminal. Subsequently, the mobility management entity may send, by using a report (Report) message, the application list it acquires to a machine type communications-inter working function entity. Similarly, the back off timer is acquired from the mobility management entity or acquired through the mobility management entity from the terminal by the machine type communications-inter working function when the terminal receives a trigger request message sent by the server before sending the trigger request message. For example, when acquiring, before sending a trigger request message, a trigger (trigger) sent by a server, a terminal determines whether the back off timer corresponding to the application accessed by the terminal based on an access point name is still running; if yes, it indicates that the data gateway (for example, a GGSN or a PDN GW) is in the overload (overload) state or the APN is in the congested (congested) state. In this case, the terminal may send a non-access stratum (Non-Access Stratum, NAS) message to a mobility management entity, where, the NAS message carries the back off timer. In this way, the mobility management entity acquires the back off timer by receiving the NAS message from the terminal. Subsequently, the mobility management entity may send, by using a report (Report) message, the acquired back off timer to a machine type communications-inter working function entity.

In some feasible implementation manners, before or after step S212, a machine type communications-inter working function entity may further send the application list and the timer to the server, and the server does not send, before the timer expires, a subsequent trigger request message for triggering an application in the application list to the terminal. Alternatively, before or after step S112, a mobility management entity may further send only a timer to the server, and before the timer expires, the server does not send a trigger request message same as the trigger request message to the terminal; or before the timer expires, the server does not send a subsequent trigger request message to the terminal; or before the timer expires, the server does not send a specified trigger request message to the terminal, where, an application triggered by the specified trigger request message is the application triggered by the trigger request message sent to the terminal.

The foregoing indicating information may be sent by using a trigger response message or sent by using another message. For example, a machine type communications-inter working function entity may send indicating information by using a delivery report message (Delivery Report) to the server. In this case, the delivery report message may further carry the application list and timer.

The indicating information includes: indicating information that indicates data gateway overload, indicating information that indicates that an access point name is congested, indicating information that indicates that the terminal is unable to set up a data connection with the server, or indicating information that indicates that a data connection is unable to be set up because of access point name congestion.

The timer is the back off timer stored by the machine type communications-inter working function entity in step S211; alternatively, the timer is at least generated according to the back off timer stored by the machine type communications-inter working function entity in step S211. The timer generation process may specifically be: a timer is generated according to the remaining time of the back off timer stored by the machine type communications-inter working function entity in step S111, or the time of the back off timer stored by the machine type communications-inter working function entity in step S111 is adjusted and the adjusted back off timer is copied to generate a timer, or the like.

In some feasible implementation manners, the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion may be acquired from the data gateway, acquired from the mobility management entity, or acquired from the terminal through the mobility management entity by the machine type communications-inter working function entity in the process in which the terminal initiates a data bearer setup to the network side. For example, in a data bearer setup process, when determining that a data gateway (for example, a GGSN or a PDN GW) is overloaded or an APN is in the congested (congested) state, a terminal receives a data bearer setup response message (PDN Connectivity Response) from the data gateway, where, the data bearer response message carries the indicating information of data gateway overload, the information indicating that the APN is congested (congested), the indicating information that indicates that the terminal is unable to set up a data connection with the server, or the indicating information that indicates that a data connection is unable to be set up because of access point name congestion. Subsequently, the terminal may carry, when sending a NAS message to a mobility management entity, the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion. In this way, the mobility management entity may acquire, by receiving the NAS message from the terminal, the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion. Subsequently, the mobility management entity may use an inform (inform) message to send the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion that it acquires to a machine type communications-inter working function entity. Alternatively, when a GGSN or a PDN GW is overloaded (overload) or an APN is in the congested (congested) state, a communications message between the terminal and the mobility management entity may be directly used to instruct the mobility management entity of the indicating information that indicates data gateway overload, the indicating information about the APN being congested (congested), the indicating information that indicates that the terminal is unable to set up a data connection with the server, or the indicating information that indicates that a data connection is unable to be set up because of access point name congestion. Subsequently, the mobility management entity may use an inform (inform) message to send the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion that it acquires to a machine type communications-inter working function entity.

In some feasible implementation manners, according to the present invention, the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion is acquired from the mobility management entity or acquired from the terminal through the mobility management entity by the machine type communications-inter working function entity when the terminal receives a trigger request message sent by the server before sending the trigger request message. For example, when acquiring, before sending a trigger request message, a trigger (trigger) sent by a server, a terminal determines whether the back off timer corresponding to the application accessed by the terminal based on an access point name is running; if yes, it indicates that the data gateway (for example, a GGSN or a PDN GW) is in the overload (overload) state or the APN is in the congested (congested) state. In this case, the terminal may send a non-access stratum (Non-Access Stratum, NAS) message to a mobility management entity, where, the NAS message carries the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion. In this way, the mobility management entity acquires, by receiving the NAS message from the terminal, the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion. Subsequently, the mobility management entity may use a report (Report) message to send the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion that it acquires to the machine type communications-inter working function entity.

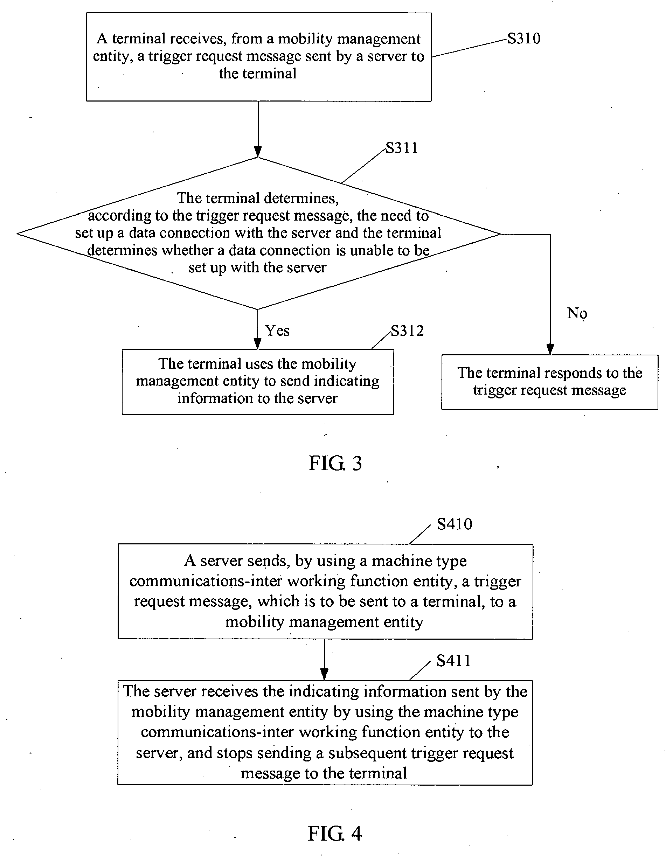

FIG. 3 is a schematic flowchart of a first embodiment of a terminal triggering method on the terminal side according to the present invention. As shown in FIG. 3, the terminal triggering method on the terminal side according to the present invention may include:
Step S310. A terminal receives, from a mobility management entity, a trigger request message sent by a server to the terminal, where, the trigger request message carries application information of an application that needs to be triggered.
Step S311. The terminal determines, according to the trigger request message, the need to set up a data connection with the server and the terminal determines whether a data connection is unable to be set up with the server; if yes, step S312 is executed; otherwise, the terminal responds to the trigger request message.
Step S312. The terminal uses the mobility management entity to send indicating information to the server, so that the server suspends sending a subsequent trigger request message to the terminal.

A specific process of determining whether a data connection is unable to be set up with the server may specifically include:
if a back off timer associated with the name of an access point is running (the back off timer may be received before the trigger request message is received or is received after the trigger request message is received and before a data connection with the server is set up) on the terminal when the terminal needs to set up the data connection with the server, determining, by the terminal, whether an application triggered by the trigger request message uses the access point name, and if yes, determining, by the terminal, that a data connection is unable to be set up with the server; or
if no back off timer is running on the terminal when the terminal needs to set up a data connection with the server, determining, by the terminal, whether a back off timer is received when the access point name used by the application triggered by the trigger request message is used to initiate a request for setting up the data connection to a data gateway; if yes, determining, by the terminal, a data connection is unable to be set up with the server.

In some feasible implementation manners, the indicating information includes: indicating information that indicates data gateway overload, indicating information that indicates that an access point name is congested, indicating information that indicates that the terminal is unable to set up a data connection with the server, or indicating information that indicates that a data connection is unable to be set up because of access point name congestion.

In some feasible implementation manners, the trigger request message in step S310 may, in addition to carrying application information of the application that needs to be triggered, further carry other information that may be carried by a trigger request message, such as indicating information about when the terminal should send a data connection request to an application server or a server corresponding to the application.

In some feasible implementation manners, the back off timer is received from a data gateway when or before the terminal uses the application information carried in the trigger request message to initiate a bearer connection request (PDN connectivity request) to the data gateway.

In some feasible implementation manners, before or after step S312, the terminal sends a timer and an application list of an application that uses the access point name and are in the terminal to the server; before the timer expires, the server does not send a subsequent trigger request message for triggering an application in the application list to the terminal. Alternatively, before or after step S312, the terminal sends only the timer to the server. Before the timer expires, the server does not send a trigger request message same as the trigger request message to the terminal; or before the timer expires, the server does not send a subsequent trigger request message to the terminal; or before the timer expires, the server does not send a specified trigger request message to the terminal, where, an application triggered by the specified trigger request message is the application triggered by the trigger request message sent to the terminal.

The timer is the back off timer that is associated with an access point name and is in the terminal, or the timer is generated according to the back off timer. The timer generation process may specifically be: a timer is generated according to the remaining time of the back off timer, or the time of the back off timer is adjusted and the adjusted back off timer is copied to generate a timer, or the like.

The foregoing indicating information may be sent by using a trigger response message or sent by using another message. For example, a terminal may send indicating information by using a delivery report message (Delivery Report) to the server. In this case, the delivery report message may further carry the application list and the back off timer. The delivery report message is sent through a mobility management entity and a machine type communications-inter working function entity to the server.

FIG. 4 is a schematic flowchart of a first embodiment of a terminal triggering method on a server side according to the present invention. It corresponds to the terminal triggering process shown in FIG. 1. Specifically, as shown in FIG. 4, the terminal triggering method on the server side according to the present invention may include:
Step S410. A server sends, by using a machine type communications-inter working function entity, a trigger request message, which is to be sent to a terminal, to a mobility management entity, where, the trigger request message carries application information of an application that needs to be triggered.
Step S411. The server receives indicating information sent by the mobility management entity by using the machine type communications-inter working function entity to the server, and suspends sending a subsequent trigger request message to the terminal.

In some feasible implementation manners, the indicating information includes: indicating information that indicates data gateway overload, indicating information that indicates that an access point name is congested, indicating information that indicates that the terminal is unable to set up a data connection with the server, or indicating information that indicates that a data connection is unable to be set up because of access point name congestion.

In some feasible implementation manners, the trigger request message in step S410 may, in addition to carrying application information of the application that needs to be triggered, further carry other information that may be carried by a trigger request message, such as indicating information about when a data connection request should be sent to an application server or a server corresponding to the application.

In some feasible implementation manners, before or after step S411, the server may further receive an application list and a back off timer. Subsequently, the method for the server to trigger a terminal may further include:
when the server needs to send a triggering message to the terminal, determining, by the server, whether an application that is triggered by the triggering message and is in the terminal is included in the application list, and determining whether the back off timer is still running when the terminal needs to set up a data connection with the server; and when determining results of both the two times of determining are yes, sending no subsequent triggering message to the terminal within validity time of the back off timer. For example, a mobility management entity may send indicating information by using a delivery report message (Delivery Report) to the server. In this case, the delivery report message may further carry the application list and the back off timer.

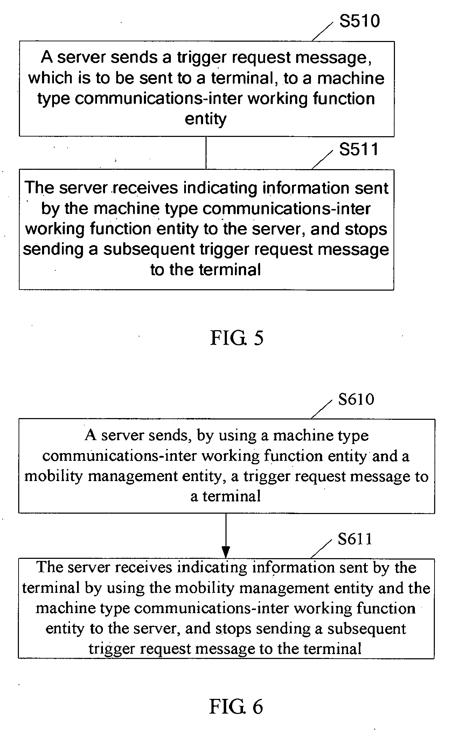

FIG. 5 is a schematic flowchart of a second embodiment of a terminal triggering method on a server side according to the present invention. It corresponds to the process of the terminal triggering method shown in FIG. 2. Specifically, as shown in FIG. 5, the terminal triggering method on the server side according to the present invention may include:
Step S510. A server sends a trigger request message, which is to be sent to a terminal, to a machine type communications-inter working function entity, where, the trigger request message carries application information of an application that needs to be triggered.
Step S511. The server receives the indicating information sent by the machine type communications-inter working function entity to the server, and suspends sending a subsequent trigger request message to the terminal.

In some feasible implementation manners, the trigger request message in step S510 may, in addition to carrying application information of the application that needs to be triggered, further carry other information that may be carried by a trigger request message, such as indicating information about when a data connection request should be sent to an application server or a server corresponding to the application.

In some feasible implementation manners, before or after step S511, the server may further receive an application list and a back off timer. Subsequently, the method for the server to trigger a terminal may further include:
when the server needs to send a triggering message to the terminal, determining, by the server, whether an application that is triggered by the triggering message and is in the terminal is included in the application list, and determining whether the back off timer is still running when the terminal needs to set up a data connection with the server; and when determining results of both the two times of determining are yes, sending no subsequent triggering message to the terminal within validity time of the back off timer. For example, a mobility management entity may send indicating information by using a delivery report message (Delivery Report) to the server. In this case, the delivery report message may further carry the application list and the back off timer.

FIG. 6 is a schematic flowchart of a third embodiment of a terminal triggering method on a server side according to the present invention. It corresponds to the process of the terminal triggering method shown in FIG. 3. Specifically, as shown in FIG. 6, the terminal triggering method on the server side according to the present invention may include:
Step S610. A server sends, by using a machine type communications-inter working function entity and mobility management entity, a trigger request message to a terminal, where, the trigger request message carries application information of an application that needs to be triggered.
Step S611. The server receives the indicating information sent by the terminal through the mobility management entity and a machine type communications-inter working function entity to the server, and suspends sending a subsequent trigger request message to the terminal.

In some feasible implementation manners, the indicating information includes: indicating information that indicates data gateway overload, indicating information that indicates that an access point name is congested, indicating information that indicates that the terminal is unable to set up a data connection with the server, or indicating information that indicates that a data connection is unable to be set up because of access point name congestion.

In some feasible implementation manners, the trigger request message in step S610 may, in addition to carrying application information of the application that needs to be triggered, further carry other information that may be carried by a trigger request message, such as indicating information about when a data connection request should be sent to the application server or a server corresponding to the application.

In some feasible implementation manners, before or after step S611, the server may further receive an application list and a back off timer. Subsequently, the method for the server to trigger a terminal may further include:
when the server needs to send a triggering message to the terminal, determining, by the server, whether an application that is triggered by the triggering message and is in the terminal is included in the application list, and determining whether the back off timer is still running when the terminal needs to set up a data connection with the server; and when determining results of both the two times of determining are yes, sending no subsequent triggering message to the terminal within validity time of the back off timer. For example, a terminal may send indicating information by using a.delivery report message (Delivery Report) to the server. In this case, the delivery report message may further carry the application list and the back off timer.

For better implementing the solutions of the method embodiments of the present invention, the present invention further provides embodiments of a network device, a terminal, and a server.

The network device according to the present invention includes: a receiving module, configured to receive a trigger request message sent by a server to a terminal; a processing module, configured to determine whether a terminal is unable to set up a data connection with a server; a sending module, configured to, when the processing module determines that a terminal is unable to set up a data connection with a server, send indicating information used to indicate data gateway overload to the server, or send to the server indicating information used to indicate that an access point name corresponding to the server is congested, indicating information that indicates that the terminal is unable to set up a data connection with the server, or indicating information that indicates that a data connection is unable to be set up because of access point name congestion, so that the server suspends sending a subsequent trigger request message to the terminal.

The terminal according to the present invention includes: a receiving module, configured to receive a trigger request message; a processing module, configured to determine whether the terminal is unable to set up a data connection with a server; a sending module, configured to, when the processing module determines that the terminal is unable to set up a data connection with a server, send indicating information that indicates data gateway overload to the server, or send to the server indicating information that indicates that the access point name corresponding to the server is congested, indicating information that indicates that the terminal is unable to set up a data connection with the server, or indicating information that indicates that a data connection is unable to be set up because of access point name congestion, so that the server suspends sending a subsequent trigger request message to the terminal.

The server according to the present invention includes: a sending module, configured to send a trigger request message to a terminal; a receiving module, configured to receive indicating information used to indicate data gateway overload, indicating information used to indicate that an access point name corresponding to the server is congested, indicating information that indicates that the terminal is unable to set up a data connection with the server, or indicating information that indicates that a data connection is unable to be set up because of access point name congestion, where the indication information is sent by a network device or the terminal; a processing module, configured to, when the receiving module receives indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion, instruct the sending module to stop sending a subsequent trigger request message to the terminal.

In some feasible implementation manners, the network device according to the present invention may include a mobility management entity (Mobility Management Entity, MME), a machine type communications-inter working function entity (Machine Type Communications-Inter Working Function, MTC-IWF), and the like.

In some feasible implementation manners, the server according to the present invention may include a services capability server (Services Capability Server, SCS), an application server (Application Server, AS), and the like.

In some feasible implementation manners, the data gateway according to the present invention may include a gateway GSN (Gateway GSN, GGSN), a packet data network gateway (PDN GW), and the like.

The application lists may include index information or content information of one or more application programs, For example, the information may be an ID list of application programs (Application ID list), a name list of application programs (Application name list), or specific content of a application program.

The back off timer is configured to restrict a duration in which the network side suspends sending a trigger to a terminal.

With reference to the accompanying drawings, the following provides examples to describe the embodiments of the network device, the terminal, and the server according to the present invention.

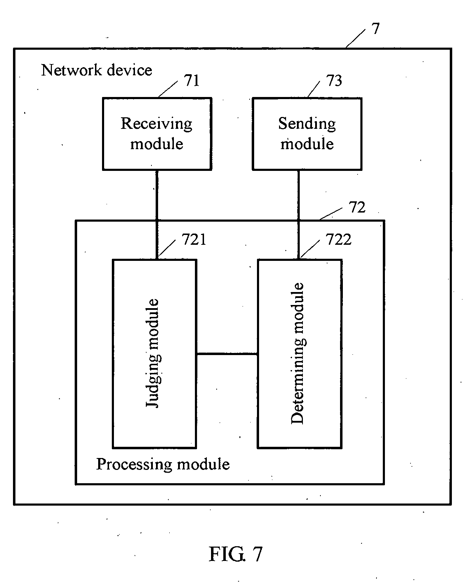

FIG. 7 is a schematic structural composition diagram of a first embodiment of a network device according to the present invention that may be configured to implement an embodiment of a terminal triggering method on a network device side according to the present invention. As shown in FIG. 7, a network device 7 according to the present invention may include a receiving module 71, a processing module 72, and a sending module 73, where: the processing module 72 may further include a judging module 721 and a determining module 722, where:
the receiving module 71 is configured to receive a trigger request message sent by a server to a terminal, where, the trigger request message carries application information of an application that needs to be triggered;
the processing module 72 is configured to determine whether a terminal is unable to be set up a data connection with the server;
the judging module 721 is configured to determine whether application information carried in the trigger request message received by the receiving module 71 is included in an application list corresponding to an access point name associated with a data gateway, and determine whether a back off timer assigned by the data gateway when the terminal needs to set up a data connection with the server is still running;
the determining module 722 is configured to, when determining results of both the two times of determining of the judging module 721 are yes, determine that the terminal is unable to set up a data connection with the server;
the sending module 73 is configured to, when the processing module 72 determines that the terminal is unable to set up a data connection with the server, send indicating information used to indicate data gateway overload to the server, or send to the server indicating information used to indicate that an access point name corresponding to the server is congested, indicating information that indicates that the terminal is unable to set up a data connection with the server, or indicating information that indicates that a data connection is unable to be set up because of access point name congestion, so that the server suspends sending a subsequent trigger request message to the terminal.

In some feasible implementation manners, the receiving module 71 is further configured to receive the application list sent by the terminal and receive the back off timer sent by the terminal or the data gateway.

Specifically, when the network device is a mobility management entity, the application list (which is marked, for example, as App Info List) may be acquired by the receiving module 71 from a terminal in a process in which the terminal initiates a data bearer setup (PDN connectivity request) to the network side. For example, in a process of setting up a data bearer, when determining that a data gateway (for example, a GGSN or a PDN GW) is overloaded, a terminal collects an application list and sends a non-access stratum (Non-Access Stratum, NAS) message to a mobility management entity, where, the NAS message carries the application list. In this way, the receiving module 71 acquires the application list by receiving the NAS message from the terminal. Similarly, the back off timer (marked as, for example, back off timer) may be acquired from the data gateway or acquired from the terminal by the receiving module 71 in a process in which the terminal initiates a data bearer setup to the network side. For example, in a process of setting up a data bearer, when determining that a data gateway (for example, a GGSN or a PDN GW) is overloaded, a terminal receives a data bearer setup response message (PDN Connectivity Response) from the data gateway, where, the data bearer response message carries a back off timer. Subsequently, the terminal may carry the back off timer when sending the NAS message to a mobility management entity. In this way, the receiving module 71 may acquire the back off timer by receiving the NAS message from the terminal. Alternatively, when the GGSN or a PDN GW is overloaded (overload) or the APN is in the congested (congested) state, a communications message between the terminal and the mobility management entity may be directly used to instruct the back off timer to the mobility management entity. In this way, the receiving module 71 may receive the back off timer from the overload notification sent by the data gateway. Furthermore, the application list may be acquired by the receiving module 71 from the terminal when the terminal receives a trigger request message sent by the server before sending the trigger request message. For example, when acquiring, before sending a trigger request message, a trigger (trigger) sent by a server, a terminal determines whether the back off timer corresponding to the application accessed by the terminal based on an access point name is still running; if yes, it indicates that the data gateway (for example, a GGSN or a PDN GW) is in the overload (overload) state or the APN is in the congested (congested) state. In this case, the terminal may collect an application list and send a non-access stratum (Non-Access Stratum, NAS) message to a mobility management entity, where, the NAS message carries the application list. In this way, the mobility management entity acquires the application list by using the receiving module 71 to receive the NAS message from the terminal. Similarly, the back off timer is acquired by the mobility management entity from the terminal by using the receiving module 71 when the terminal receives a trigger request message sent by the server before sending the trigger request message. For example, when acquiring, before sending a trigger request message, a trigger (trigger) sent by a server, a terminal determines whether the back off timer corresponding to the application accessed by the terminal based on an access point name is still running; if yes, it indicates that the data gateway (for example, a GGSN or a PDN GW) is in the overload (overload) state or the APN is in the congested (congested) state. In this case, the terminal may send a non-access stratum (Non-Access Stratum, NAS) message to a mobility management entity, where, the NAS message carries the back off timer. In this way, the mobility management entity acquires the back off timer by using the receiving module 71 to receive the NAS message from the terminal.

Specifically, when the network device is a machine type communications-inter working function entity, the application list may be acquired from the terminal by the receiving module 71 through the mobility management entity in a process in which the terminal initiates a data bearer setup to the network side. For example, in a process of setting up a data bearer, when determining that a data gateway (for example, a GGSN or a PDN GW) is overloaded, a terminal collects an application list and sends a non-access stratum (Non-Access Stratum, NAS) message to a mobility management entity, where, the NAS message carries the application list. Subsequently, the mobility management entity acquires the application list by receiving the NAS message from the terminal. Subsequently, the mobility management entity may send, by using an inform (inform) message, the application list it acquires to the receiving module 71 of a machine type communications-inter working function entity. Similarly, the back off timer may be acquired from the data gateway, acquired from the mobility management entity, or acquired from the terminal through the mobility management entity by the receiving module 71 of the machine type communications-inter working function entity in a process in which the terminal initiates a data bearer setup to the network side. For example, in a process of setting up a data bearer, when determining that a data gateway (for example, a GGSN or a PDN GW) is overloaded, a terminal receives a data bearer setup response message (PDN Connectivity Response) from the data gateway, where, the data bearer response message carries a back off timer. Subsequently, the terminal may carry the back off timer when sending the NAS message to a mobility management entity. In this way, the mobility management entity may acquire, by receiving the NAS message from the terminal, the back off timer. Subsequently, the mobility management entity may send, by using an inform (inform) message, the acquired back off timer to the receiving module 71 of a machine type communications-inter working function entity. Alternatively, when a GGSN or a PDN GW is overloaded (overload) or an APN is in the congested (congested) state, a communications message between the terminal and the mobility management entity may be directly used to instruct the back off timer to the machine type communications-inter working function entity. Furthermore, the application list according to the present invention is acquired from the mobility management entity or acquired through the mobility management entity from the terminal by the receiving module 71 of the machine type communications-inter working function when the terminal receives a trigger request message sent by the server before sending the trigger request message. For example, when acquiring, before sending a trigger request message, a trigger (trigger) sent by a server, a terminal determines whether the back off timer corresponding to the application accessed by the terminal based on an access point name is still running; if yes, it indicates that the data gateway (for example, a GGSN or a PDN GW) is in the overload (overload) state or the APN is in the congested (congested) state. In this case, the terminal may collect an application list and send a non-access stratum (Non-Access Stratum, NAS) message to a mobility management entity, where, the NAS message carries the application list. In this way, the mobility management entity acquires the application list by receiving the NAS message from the terminal. Subsequently, the mobility management entity may send, by using a report (Report) message, the application list it acquires to the receiving module 71 of a machine type communications-inter working function entity. Similarly, the back off timer is acquired from the mobility management entity or acquired through the mobility management entity from the terminal by the receiving module 71 of the machine type communications-inter working function when the terminal receives a trigger request message sent by the server before sending the trigger request message. For example, when acquiring, before sending a trigger request message, a trigger (trigger) sent by a server, a terminal determines whether the back off timer corresponding to the application accessed by the terminal based on an access point name is still running; if yes, it indicates that the data gateway (for example, a GGSN or a PDN GW) is in the overload (overload) state or the APN is in the congested (congested) state. In this case, the terminal may send a non-access stratum (Non-Access Stratum, NAS) message to a mobility management entity, where, the NAS message carries the back off timer. In this way, the mobility management entity acquires the back off timer by receiving the NAS message from the terminal. Subsequently, the mobility management entity may send, by using a report (Report) message, the acquired back off timer to the receiving module 71 of a machine type communications-inter working function entity.

In some feasible implementation manners, the receiving module 71 may further be configured to receive the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion, or to receive an application list, determine, according to the application list, that the terminal is unable to set up a data connection with the server, and generate the indicating information used to indicate data gateway overload, the indicating information used to indicate that the access point name corresponding to the server is congested, the indicating information that indicates that the terminal is unable to set up a data connection with the server, or indicating information that indicates that a data connection is unable to be set up because of access point name congestion.

Specifically, when the network device is a mobility management entity, the indicating information used to indicate data gateway overload, the indicating information used to indicate that the access point name corresponding to the server is congested (for example, indicating that a GGSN or a PDN GW is overloaded or an APN is in the congested (congested) state), the indicating information that indicates that the terminal is unable to set up a data connection with the server, or the indicating information that indicates that a data connection is unable to be set up because of access point name congestion may also be acquired from the data gateway or acquired from the terminal by the receiving module 71 of the mobility management entity in a process in which the terminal initiates a data bearer setup to the network side. For example, in a process of setting up a data bearer, when determining that a data gateway (for example, a GGSN or a PDN GW) is overloaded, a terminal receives a data bearer setup response message (PDN Connectivity Response) from the data gateway, where, the data bearer response message carries a data gateway overload indication information. Subsequently, the terminal may carry the data gateway overload indication when sending a NAS message to a mobility management entity. In this way, the receiving module 71 of the mobility management entity may acquire, by receiving the NAS message from the terminal, the indicating information used to indicate data gateway overload to the server, or send to the server the indicating information used to indicate that the access point name corresponding to the server is congested, the indicating information that indicates that the terminal is unable to set up a data connection with the server, or the indicating information that indicates that a data connection is unable to be set up because of access point name congestion. Alternatively, when a GGSN or a PDN GW is overloaded (overload) or an APN is in the congested (congested) state, a communications message between the terminal and a mobility management entity may be directly used to instruct the data gateway overload indication information to the receiving module 71 of the mobility management entity. Alternatively, the receiving module 71 of the mobility management entity may determine, according to an application list sent by a terminal, that the terminal is unable to set up a data connection with the server, and generate the indicating information used to indicate data gateway overload to the server, or send to the server the indicating information used to indicate that the access point name corresponding to the server is congested, the indicating information that indicates that the terminal is unable to set up a data connection with the server, or the indicating information that indicates that a data connection is unable to be set up because of access point name congestion. Similarly, the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion is acquired from the terminal by the mobility management entity when the terminal receives a trigger request message sent by the server before sending the trigger request message. For example, when acquiring, before sending a trigger request message, a trigger (trigger) sent by a server, a terminal determines whether the back off timer corresponding to the application accessed by the terminal based on an access point name is running; if yes, it indicates that the data gateway (for example, a GGSN or a PDN GW) is in the overload (overload) state or the APN is in the congested (congested) state. In this case, the terminal may send a non-access stratum (Non-Access Stratum, NAS) message to a mobility management entity, where, the NAS message carries the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion. In this way, the mobility management entity acquires, by receiving the NAS message from the terminal, the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion.

Specifically, when the network device is a machine type communications-inter working function entity, the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion may be acquired from the data gateway, acquired from the mobility management entity, or acquired from the terminal through the mobility management entity by the receiving module 71 of the machine type communications-inter working function entity in a process in which the terminal initiates a data bearer setup to the network side. For example, in the data bearer setup process, when determining that a data gateway (for example, a GGSN or a PDN GW) is overloaded, a terminal receives a data bearer setup response message (PDN Connectivity Response) from the data gateway, where, the data bearer response message carries a data gateway overload indication information. Subsequently, the terminal may carry, when sending a NAS message to a mobility management entity, the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion. In this way, the mobility management entity may acquire, by receiving the NAS message from the terminal, the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion. Subsequently, the mobility management entity may use an inform (inform) message to send the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion that it acquires to the receiving module 71 of a machine type communications-inter working function entity. Alternatively, when a GGSN or a PDN GW is overloaded (overload) or an APN is in the congested (congested) state, a communications message between the terminal and a mobility management entity may be directly used to instruct the data gateway overload indication information to the mobility management entity. Subsequently, the mobility management entity may use an inform (inform) message to send the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion that it acquires to a machine type communications-inter working function entity. Alternatively, the indicating information may be generated by the machine type communications-inter working function entity according to an application list sent by the terminal. Similarly, according to the present invention, the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion is acquired from the mobility management entity or acquired from the terminal through the mobility management entity by the machine type communications-inter working function entity when the terminal receives a trigger request message sent by the server before sending the trigger request message. For example, when acquiring, before sending a trigger request message, a trigger (trigger) sent by a server, a terminal determines whether the back off timer corresponding to the application accessed by the terminal based on an access point name is running; if yes, it indicates that the data gateway (for example, a GGSN or a PDN GW) is in the overload (overload) state or the APN is in the congested (congested) state. In this case, the terminal may send a non-access stratum (Non-Access Stratum, NAS) message to a mobility management entity, where, the NAS message carries the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion. In this way, the mobility management entity acquires, by receiving the NAS message from the terminal, the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion. Subsequently, the mobility management entity may use a report (Report) message to send the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion that it acquires to the machine type communications-inter working function entity. Furthermore, after receiving an application list, the receiving module 71 may determine, according to the application list, that the terminal is unable to set up a data connection with the server, and generate the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion.

In some feasible implementation manners, when the receiving module 71 receives the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion sent by the terminal or the data gateway, the processing module 72 no longer includes the judging module 721 and the determining module 722, but when it is determined that the receiving module 71 receives the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion sent by the terminal or the data gateway, determines that the terminal is unable to set up a data connection with the server.

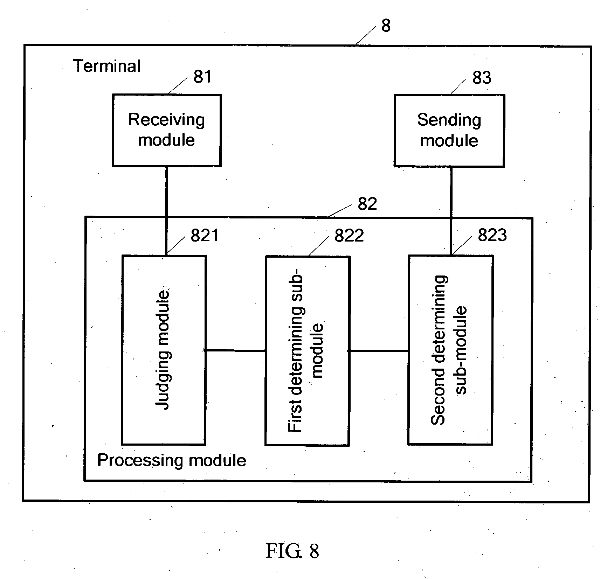

FIG. 8 is a schematic structural composition diagram of a first embodiment of a terminal according to the present invention that may be configured to implement an embodiment of a terminal triggering method on a terminal side according to the present invention. As shown in FIG. 8, a terminal 8 according to the present invention may include a receiving module 81, a processing module 82, and a sending module 83, where: the processing module 82 may further include a judging module 821, a first determining sub-module 822, and a second determining module 823 (optional), where:
the receiving module 81 is configured to receive a trigger request message, where, the trigger request message carries application information of an application that needs to be triggered, and the trigger request message is configured to trigger the terminal to set up a data connection with the server for starting the application;
the processing module 82 is configured to determine whether the terminal is unable to be set up a data connection with the server;
the judging module 821 is configured to determine whether the application information carried in the trigger request message received by the receiving module 81 is included in an application list corresponding to a access point name, and determine whether a back off timer is still running when the terminal needs to set up a data connection with the server;
the first determining sub-module 822 is configured to, when determining results of both the two times of determining of the judging module 821 are yes, determine that the terminal is unable to set up a data connection with the server;
the second determining sub-module 823 is configured to, when determining results of the two times of determining of the judging module 821 are not both no and the receiving module 81 on the terminal uses the access point name corresponding to the application information carried in a trigger request message to initiate a data connection request to a data gateway or receives, before that, a back off timer sent by the data gateway, determine that the terminal is unable to set up a data connection with the server;

In some feasible implementation manners, the receiving module 81 is further configured to, when or before the terminal uses the application information carried in the trigger request message to initiate a bearer connection request to the data gateway, receive the back off timer. For example, in a process of setting up a data bearer or before that, when determining that a data gateway (for example, a GGSN or a PDN GW) is overloaded, a terminal uses the receiving module 81 to receive a data bearer setup response message (PDN Connectivity Response) from the data gateway, where, the data bearer response message carries a back off timer.

The sending module 83 is configured to, when the processing module 82 determines that the terminal is unable to set up a data connection with the server, send indicating information that indicates data gateway overload to the server, or send to the server indicating information that indicates that the access point name corresponding to the server is congested, indicating information that indicates that the terminal is unable to set up a data connection with the server, or indicating information that indicates that a data connection is unable to be set up because of access point name congestion, so that the server suspends sending a subsequent trigger request message to the terminal.

In some feasible implementation manners, the sending module 83 is further configured to send, when the processing module 82 determines that the terminal is unable to set up a data connection with the server, the back off timer and application list to the server.

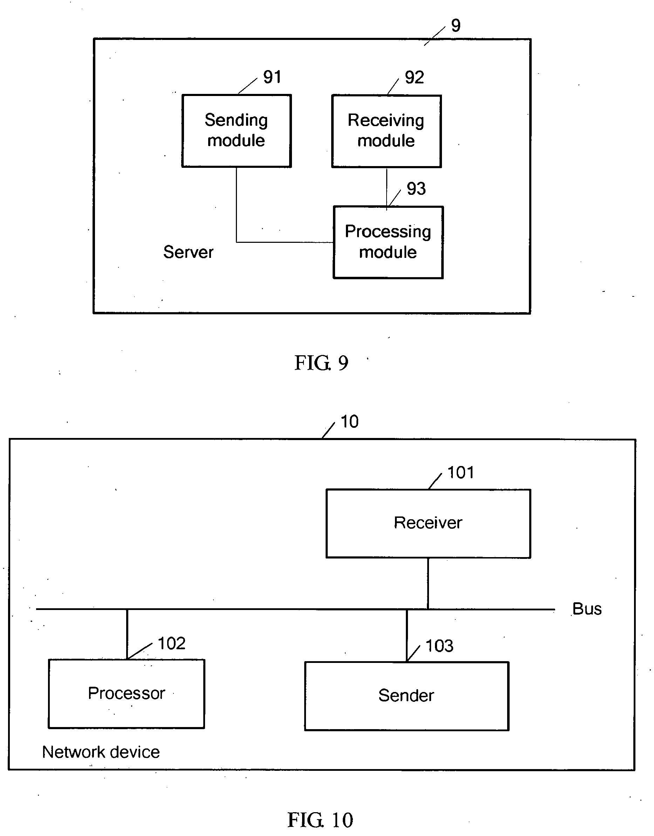

FIG. 9 is a schematic structural composition diagram of a first embodiment of a server according to the present invention that may be configured to implement an embodiment of a terminal triggering method on a server side according to the present invention. As shown in FIG. 9, a server 9 according to the present invention may include a sending module 91, a receiving module 92, and a processing module 93, where:
the sending module 91 is configured to send a trigger request message to a terminal, where, the trigger request message carries application information of an application that needs to be triggered, and the trigger request message is configured to trigger the terminal to set up a data connection with the server for starting the application;
the receiving module 92 is configured to receive the indicating information used to indicate data gateway overload, indicating information used to indicate that an access point name corresponding to the server is congested, indicating information that indicates that the terminal is unable to set up a data connection with the server, or indicating information that indicates that a data connection is unable to be set up because of access point name congestion, where the indication information is sent by a network device or the terminal;
the processing module 93 is configured to, when the receiving module 92 receives the indicating information used to indicate data gateway overload, the indicating information used to indicate that the access point name corresponding to the server is congested, the indicating information that indicates that the terminal is unable to set up a data connection with the server, or the indicating information that indicates that a data connection is unable to be set up because of access point name congestion, instruct the sending module 91 to suspend sending a subsequent trigger request message to the terminal;

In some feasible implementation manners, the receiving module 91 is further configured to receive the application list and the back off timer.

In this case, the server may optionally include:
the processing module 93, further configured to determine whether application information in the server is included in the application list and determine whether the back off timer is still running when the terminal needs to set up a data connection with the server; and when determining results of both the two times of determining are yes, instruct the sending module to send a subsequent trigger request message to the terminal within validity time of the back off timer.

In hardware implementation, a network device 10 according to the present invention may include a receiver 101, a processor 102, and a sender 103. In some feasible implementation manners, the receiver 101, processor 102, and sender 103 may be connected by using a bus or another means. The example in FIG. 10 uses a bus for connection, where:
the receiver 101 is configured to receive a trigger request message sent by a server to the terminal;
the processor 102 is configured to determine, according to a trigger request message, the need of the terminal to set up a data connection with the server, and when it is determined that the terminal is unable to set up a data connection with the server, instruct the sender 103; and
the sender 103 is configured to send indicating information to the server according to the notification of the processor 102, so that the server suspends sending a subsequent trigger request message to the terminal.

In some feasible implementation manners, the processor 102 is specifically configured to:
if a back off timer associated with the name of an access point is running on the network device when it is determined that the terminal needs to set up a data connection with the server, determine whether an application triggered by the trigger request message is included in the application list corresponding to the access point name, and if yes, determine that the terminal is unable to set up a data connection with the server;
alternatively,
if a back off timer associated with the name of an access point is running on the network device when it is determined that the terminal needs to set up a data connection with the server, determine whether an application triggered by the trigger request message uses the access point name, and if yes, determine that the terminal is unable to set up a data connection with the server.

In some feasible implementation manners, the network device according to the present invention is specifically a mobility management entity or a machine type communications-inter working function entity, and the receiver 101 is further configured to receive the application list sent by the terminal and the back off timer sent by the terminal or the data gateway; the network device is specifically a machine type communications-inter working function entity, and the receiver 101 is further configured to receive the application list sent by the terminal through a mobility management entity and the back off timer sent by the terminal through the mobility management entity or sent by the data gateway.

In some feasible implementation manners, the indicating information includes: indicating information that indicates data gateway overload, indicating information that indicates that an access point name is congested, indicating information that indicates that the terminal is unable to set up a data connection with the server, or indicating information that indicates that a data connection is unable to be set up because of access point name congestion.

In some feasible implementation manners, the sender 103 is further configured to, after the processor determines that the terminal is unable to be set up a data connection with the server, send a timer and an application list of an application that uses the access point name and are in the terminal to the server, or send the timer to the server.

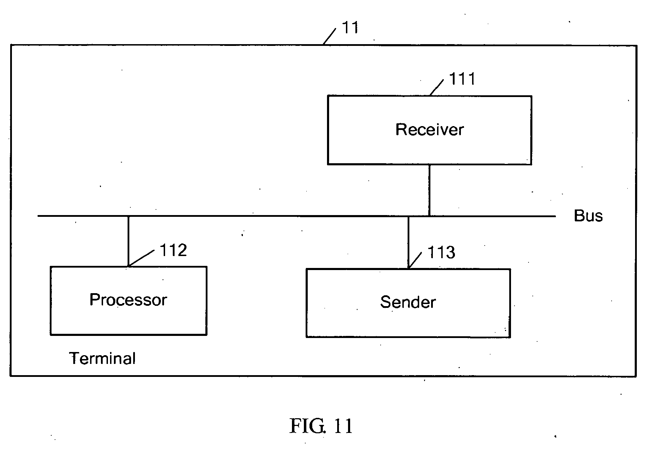

In hardware implementation, a terminal 11 according to the present invention may include a receiver 111, a processor 112, and a sender 113. In some feasible implementation manners, the receiver 111, processor 112, and sender 113 may be connected by using a bus or another means. The example in FIG. 11 uses a bus for connection, where:
the receiver 111 is configured to receive a trigger request message sent by a server to the terminal;
the processor 112 is configured to determine, according to the trigger request message, the need to set up a data connection, and when it is determined that the data connection with the server is unable to be set up, instruct the sender 113; and
the sender 113 is configured to send indicating information to the server according to the notification of the processor 112, so that the server suspends sending a subsequent trigger request message to the terminal.

In some feasible implementation manners, the processor 112 is specifically configured to: if a back off timer associated with the name of an access point is running on the terminal when the terminal needs to set up a data connection with the server, determine whether the application triggered by the trigger request message uses the access point name, and if yes, determine that a data connection is unable to be set up with the server.

In some feasible implementation manners, the processor 112 is specifically configured to: if no back off timer is running on the terminal when the terminal needs to set up a data connection with the server, determine whether a back off timer is received when the access point name used by the application triggered by the trigger request message is used to initiate a request for setting up the data connection to a data gateway, and if yes, determine that a data connection with the server is unable to be set up.

In some feasible implementation manners, the indicating information includes: indicating information that indicates data gateway overload, indicating information that indicates that an access point name is congested, indicating information that indicates that the terminal is unable to set up a data connection with the server, or indicating information that indicates that a data connection is unable to be set up because of access point name congestion.

In some feasible implementation manners, the sender 113 is further configured to, after the processor 112 determines that the terminal is unable to be set up a data connection with the server, send a timer and an application list of an application that uses the access point name and are in the terminal to the server, or send the timer to the server.

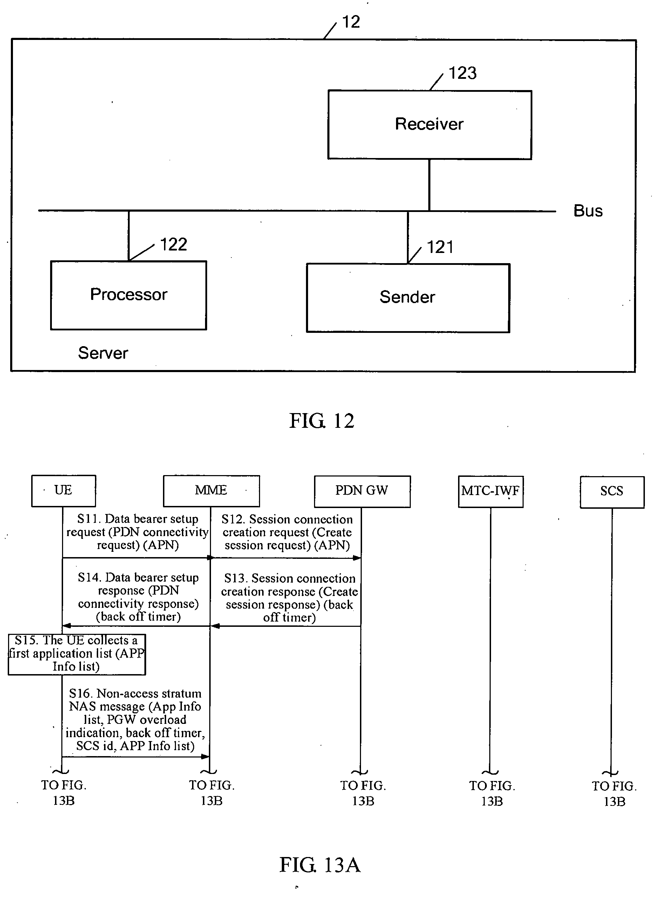

In hardware implementation, a server 12 according to the present invention may include a sender 121, a processor 122, and a receiver 123. In some feasible implementation manners, the sender 121, processor 122, and receiver 123 may be connected by using a bus or another means. The example in FIG. 12 uses a bus for connection, where:
the sender 121 is configured to send a trigger request message to a terminal;
the receiver 123 is configured to receive indicating information sent by a network device or the terminal;
the processor 122 is configured to learn, according to the indicating information, that the terminal is unable to complete an operation requested by the trigger request message, and instruct the sender; and the sender 121 is further configured to suspend sending a subsequent trigger request message to the terminal according to the notification of the processor.

In some feasible implementation manners, the indicating information includes: indicating information that indicates data gateway overload, indicating information that indicates that an access point name is congested, indicating information that indicates that the terminal is unable to set up a data connection with the server, or indicating information that indicates that a data connection is unable to be set up because of access point name congestion.

In some feasible implementation manners, the receiver 123 is further configured to, after the server sends a trigger request message to the terminal, receive a timer and an application list, sent by the terminal or the network device, of an application that uses an access point name and are in the terminal, where, a back off timer associated with the access point name is running on the terminal or the network device;
the processor 122 is specifically be configured to, before the timer expires, instruct the sender not to send a subsequent trigger request message that triggers an application in the application list to the terminal.

In some feasible implementation manners, the receiver 123 is further configured to, after the server sends a trigger request message to the terminal, receive a timer set by the terminal or the network device; and the processor 122 is specifically configured to, before the timer expires, instruct the sender not to send a trigger request message same as the trigger request message to the terminal; or before the timer expires, instruct the sender not to send a subsequent trigger request message to the terminal; or before the timer expires, instruct the sender not to send a specified trigger request message to the terminal, where, an application triggered by the specified trigger request message is the application triggered by the trigger request message sent to the terminal.

In specific implementation, the receivers and senders in the foregoing hardware implementation may be same or different antennas, and the processors in the foregoing implementation may be CPUs, and the like.

To facilitate better understanding of the technical solutions provided by the embodiments of the present invention, the following uses specific application scenarios to further describe the present invention.

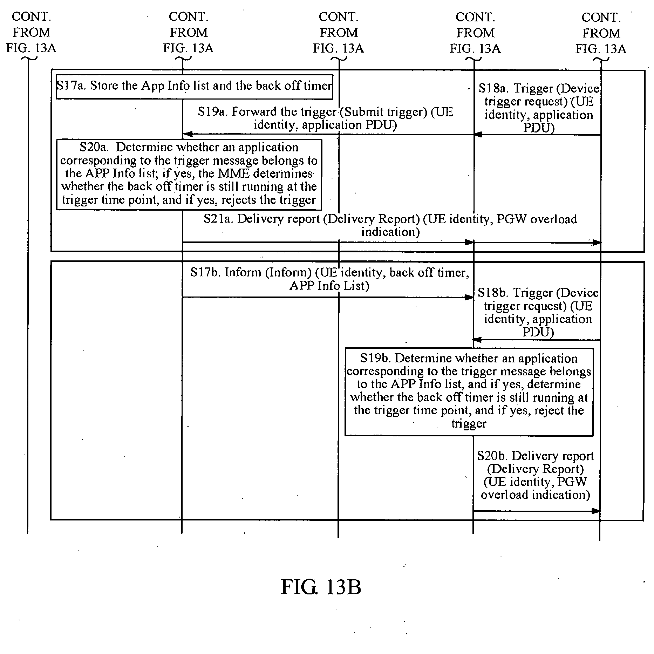

FIG. 13A and FIG. 13B are a schematic flowchart of implementing an embodiment of the present invention in a data bearer setup process. In the embodiment, a network device is a mobility management entity (MME) or a machine type communications-inter working function entity (MTC-IWF), a data gateway is a packet data network gateway (PDN GW, PGW for short), and a server is a services capability server (SCS). As shown in FIG. 13A and FIG. 13B, the process may include:
S11. A terminal (UE) initiates a data bearer setup request (PDN connectivity request) to a mobility management entity (MME), where the request message includes an access point name (Access Point Name, APN).
S12. After receiving the data bearer setup request, the MME sends a session connection creation request (Create Session Request) to a PGW, where the request message includes the APN.
S13. When the PGW is in an overload (overload) state or the APN is in a congested (congested) state, the PGW replies a session connection creation response (Create Session Response) to the MME, where the response message carries a back off timer (back off timer) based on the APN.
S14. The MME replies a data bearer setup response message (PDN connectivity response) to the UE, where the response message carries the back off timer for instructing the UE that the PGW is overloaded (overload) or the APN is in the congested state.
S15. The UE determines, according to interaction with the MME in an attaching or position updating process that the MME support a trigger (trigger) function, and then the UE collects application program information corresponding to the APN in step S11 to generate an application list (APP Info list). In specific implementation, the APP Info list may be description information of application programs related to the APN in the UE, such as QQ and MSN, or may also be flag IDs of application programs.
S16. The UE uses a non-access stratum (NON-Access Stratum, NAS) message to send the APP Info list to the MME, where the NAS message may further include at least one of an indication information about the PDN GW being overloaded, an indication information about the APN being congested (congested), and a back off timer.

It should be noted that: in specific implementation, in addition to determining the PDN GW being overloaded or the APN being congested (congested), the APP Info list, and the back off timer by using step S16, the MME may also use another means for determining.

S17a. The MME stores the APP Info list and the back off timer.

S18a. The machine type communications-inter working function entity (MTC-IWF) receives a trigger (trigger) request sent by a server SCS to the UE.

S19a. The MTC-IWF forwards the received trigger request to the MME.

S20a. The MME determines whether the application corresponding to the trigger request belongs to the APP Info list; if yes, the MME determines whether the back off timer is still running at the trigger time point, and if yes, rejects the trigger request.

It should be noted that: the two determining processes in S20a are not sequential, either determining may be the implemented first. Only when determining results of both the two times of determining are yes, the MME rejects the trigger.

S21a. The MME sends a delivery report (Delivery Report) message to the SCS by using the MTC-IWF, where, the delivery report carries a UE flag, the indication information of PDN GW overload, or the indication information of a congested APN, to instruct the SCS that the UE is unable to complete the trigger process of the SCS. The Delivery Report may further carry the APP Info list and the back off timer. By then, when receiving the Delivery Report and acquiring the indication information of PDN GW overload or the indication information of a congested APN, the SCS suspends sending a trigger to the UE.

Steps S11 to S21a describe the solution for the MME to determine whether to reject a trigger after the MME receives a trigger request forwarded by the MTC-IWF. In specific implementation, when the execution of S16 is completed, the MME may further send the received APP Info list and back off timer to the MTC-IWF, and then the MTC-IWF determines whether to reject the trigger. At the time after the execution of S16 is completed, the following steps are executed:
S17b. The MME uses an Inform message (inform) to send the APP Info list, the back off timer, and the UE flag to the MTC-IWF.
S18b. The MTC-IWF receives the trigger request sent by the server SCS to the UE.
S19b. The MTC IWF determines whether the application corresponding to the trigger request belongs to the APP Info list; if yes, the MTC IWF determines whether the back off timer is still running at the trigger time point, and if yes, rejects the trigger.

It should be noted that: the two determining processes in S19b are not sequential, either determining may be the implemented first. Only when determining results of both the two times of determining are yes, the MME rejects the trigger.

S20b. The MTC IWF sends a delivery report (Delivery Report) message to the SCS, where, the delivery report carries a UE flag and the indication information of PDN GW overload or the indication information of a congested APN, to instruct the SCS that the UE is unable to complete the trigger process. The Delivery Report may further carry the APP Info list and the back off timer.

By then, when receiving the Delivery Report and acquiring the indication information of PDN GW overload or the indication information of a congested APN, the SCS suspends sending a trigger to the UE.

In the foregoing process, the PGW overload indication information (PGW overload indication information) and the back offer timer are notified by the UE to the MME and the MTC-IWF. In specific implementation, the PGW overload indication may also be directly notified by the PGW to the MME and the MTC-IWF by using a delivery report message (Delivery Report), which simplifies the process in which a terminal submits a report by using a NAS message.

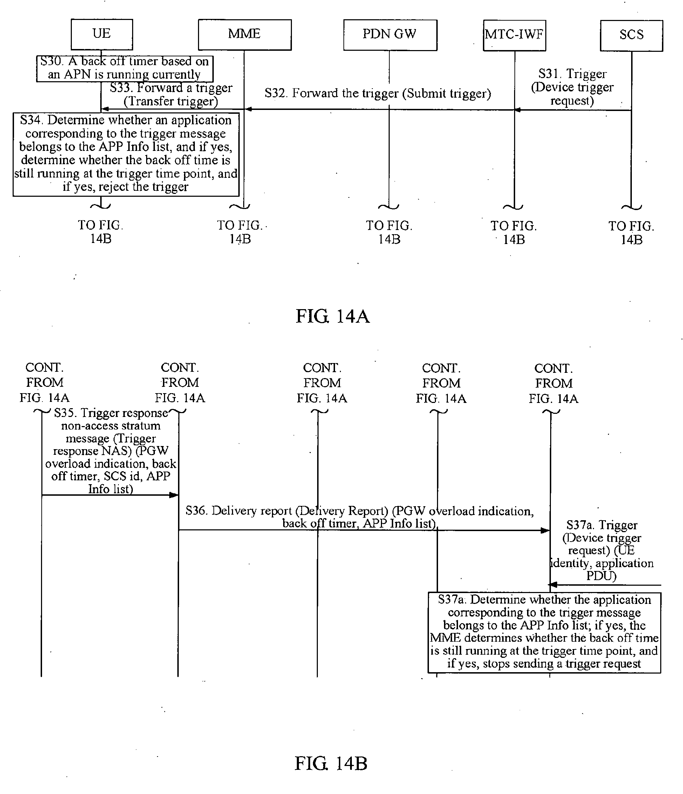

FIG. 14A and FIG. 14B are a schematic flowchart of implementing an embodiment of the present invention in a process of continuously sending a trigger. In the embodiment, a network device is a mobility management entity (MME) or a machine type communications-inter working function entity (MTC-IWF), a data gateway is a packet data network gateway (PDN GW, PGW for short), and a server is a services capability server (SCS). As shown in FIG. 14A and FIG. 14B, the process may include:
S30. A back off timer based on an APN is running on a UE currently.
S31. The server SCS sends a trigger request to the UE and the MTC-IWF receives the trigger request.
S32. The MTC-IWF forwards the trigger request to the MME.
S33. The MME forwards the trigger request to the UE.
S34. The UE determines, according to the received trigger request, whether the application corresponding to the trigger request belongs to the APN in step S30; if yes, the UE further determines whether the back off time in the S30 is still running at the trigger time point; if yes, step S35 is executed.
S35. The UE uses a non-access stratum (NON-Access Stratum, NAS) message to send an APP Info list to the MME, where the NAS message may further include any one of an indication information about the PDN GW being overloaded, an indication information about the APN being congested, and a back off timer.
It should be noted that: the MME itself may, by using another means, learn that the PDN GW is in the overload state or the APN is in the congested state and learn about the APP Info list and the back off timer.
S36. The MME sends a delivery report (Delivery Report) message to the SCS by using the MTC IWF, where, the delivery report carries a UE flag and the indication information of PDN GW overload or the indication information of a congested APN, to instruct the SCS that the UE is unable to complete the trigger process. Optionally, the Delivery Report may further carry the APP Info list and the back off timer.
S37a. When the server SCS sends the trigger request to the UE, the SCS determines whether the application corresponding to the trigger request belongs to the APP Info list; if yes, the SCS determines whether the back off time is still running at the trigger time point, and if yes, suspends sending a trigger request.

It should be noted that: the two determining processes in S37a are not sequential, either determining may be the implemented first. Only when determining results of both the two times of determining are yes, the SCS suspend sending a trigger request.

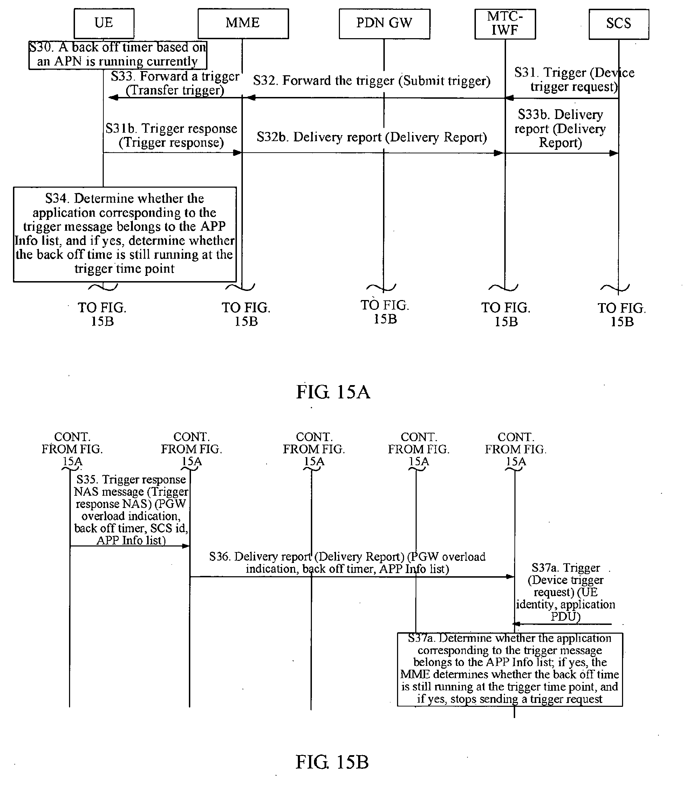

In the process described in steps S30 to S37a, the UE executes, after the MME forwards the trigger request to the UE, S34 and subsequent steps. In specific implementation, the UE may also execute, after using a delivery report response message (Delivery Report) to send a feedback of information about the trigger received in step S33 to the SCS, step S34 and its following steps. The process may be as shown in FIG. 15A and FIG. 15B.

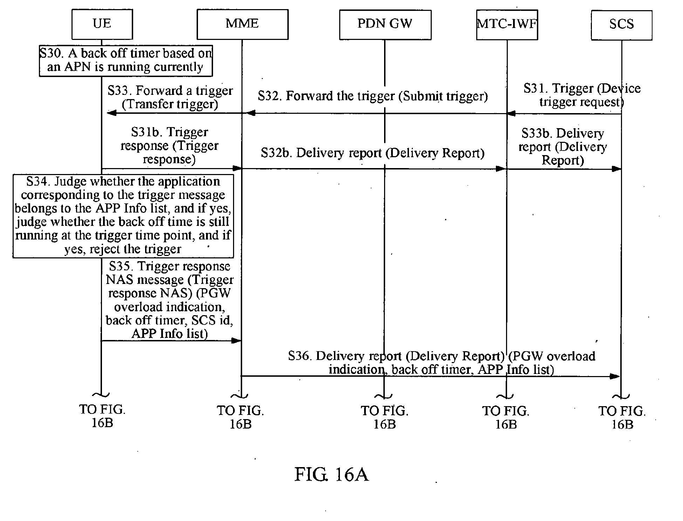

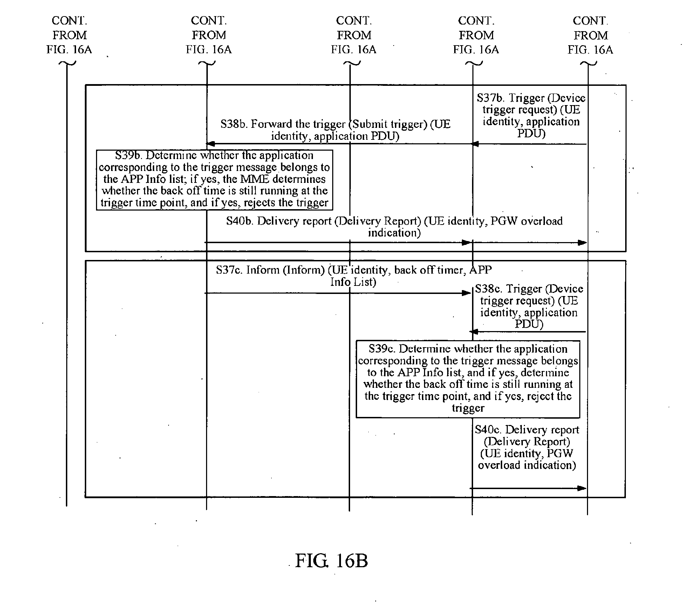

FIG. 16A and FIG. 16B are a schematic flowchart of implementing an embodiment of the present invention in process of continuously sending a trigger. In the embodiment, a network device is a mobility management entity (MME) or a machine type communications-inter working function entity (MTC-IWF), a data gateway is a packet data network gateway (PDN GW, PGW for short), and a server is a services capability server (SCS). As shown in FIG. 16A and FIG. 16B, the process may include:
S30. A back off timer based on an APN is running on a UE currently.
S31. The server SCS sends a trigger request to the UE and the MTC-IWF receives the trigger request.
S32. The MTC-IWF forwards the trigger request to the MME.
S33. The MME forwards the trigger request to the UE.
S34. The UE determines, according to the received trigger request, whether the application corresponding to the trigger request belongs to the APN in step S30; if yes, the UE further determines whether the back off time in the S30 is still running at the trigger time point; if yes, step S35 is executed.
S35. The UE uses a non-access stratum (NON-Access Stratum, NAS) message to send an APP Info list to the MME, where the NAS message may further include any one of an indication information about the PDN GW being overloaded, an indication information about the APN being congested, and a back off timer.

It should be noted that: the MME itself may, by using another means, learn that the PDN GW is in the overload state or the APN is in the congested state and learn about the APP Info list and the back off timer.

S36. The MME sends a delivery report (Delivery Report) message to the SCS by using the MTC-IWF, where, the delivery report carries a UE flag and the indication information of PDN GW overload or the indication information of a congested APN, to instruct the SCS that the UE is unable to complete the trigger process. The Delivery Report may further carry the APP Info list and the back off timer.

By then, when receiving the Delivery Report, the SCS suspends sending a trigger to the UE.

Still with reference to FIG. 16A and FIG. 16B, after the server SCS suspends, after receiving the Delivery Report, sending a trigger, the process of resending a trigger (trigger) to the terminal may include:
S37b. The machine type communications-inter working function entity (MTC-IWF) receives the trigger (trigger) request sent by the server SCS to the UE.
S38b. The MTC-IWF forwards the received trigger request to the MME.
S39b. The MME determines whether the application corresponding to the trigger request belongs to the APP Info list; if yes, the MME determines whether the back off timer is still running at the trigger time point, and if yes, rejects the trigger.

It should be noted that: the two determining processes in S39b are not sequential, either determining may be the implemented first. Only when determining results of both the two times of determining are yes, the MME rejects the trigger request.

S40b. The MME uses the MTC-IWF to send a delivery report (Delivery Report) message to the SCS, where, the delivery report carries a UE flag and the indication information of PDN GW overload or the indication information of a congested APN, to instruct the SCS that the UE is unable to complete the trigger process. Optionally, the Delivery Report may further carry the APP Info list and the back off timer. By then, when receiving the Delivery Report, the SCS suspends sending a trigger to the UE.

In the process described in steps S37b to S40b, in a solution that after the MME receives the trigger request forwarded by the MTC-IWF, the MME determines whether to reject the trigger request, in specific implementation, the MME may further send the received APP Info list and back off timer to the MTC-IWF, and then the MTC-IWF determines whether to reject the trigger request. In this case, steps S37b to S40b may be replaced by the following steps:
S37c. The MME uses an Inform message (Inform) to send the APP Info list, the back off timer, and the UE flag to the MTC IWF.
S38c. The MTC-IWF receives the trigger request sent by the server SCS to the UE.
S39c. The MTC IWF determines whether the application corresponding to the trigger request belongs to the APP Info list; if yes, the MTC IWF determines whether the back off timer is still running at the trigger time point, and if yes, rejects the trigger request.

It should be noted that: the two determining processes in S39c are not sequential, either determining may be the implemented first. Only when determining results of both the two times of determining are yes, the MME rejects the trigger request.

S40c. The MTC IWF sends a delivery report (Delivery Report) message to the SCS, where, the delivery report carries a UE flag, the indication information of PDN GW overload, or the indication information of a congested APN, to instruct the SCS that the UE is unable to complete the trigger process. Optionally, the Delivery Report may further carry the APP Info list and the back off timer. By then, when receiving the Delivery Report, the SCS suspends sending a trigger to the UE.

The foregoing content merely lists the relative sound embodiments of the present invention, and certainly the scope of claims of the present invention may not be limited thereby. Therefore, equivalent changes and variations made according to the claims of the invention are still within the scope of the present invention.

## Claims

1. A terminal triggering method, wherein the method is implemented by a terminal, and the method comprises:
receiving (S310), from a mobility management entity, a trigger request message sent by a server to the terminal, where the trigger request message carries application information of an application that needs to be triggered;
determining (S311), according to the trigger request message, the need to set up a data connection with the server;
determining (S311) whether a data connection is unable to be set up with the server;
sending (S312) indicating information to the server by using the mobility management entity in a case where the terminal determines that a data connection is unable to be set up with the server, so that the server suspends sending a subsequent trigger request message to the terminal;
responding to the trigger request message in a case where the terminal determines that a data connection is able to be set up with the server;
wherein the determining (S311) that a data connection is unable to be set up with the server specifically comprises:
having a case where the terminal needs to set up a data connection with the server, and a back off timer associated with an access point name is running on the terminal; and
in this case, both :
determining whether the application triggered by the trigger request message uses the access point name; and
in a case where the application triggered by the trigger request message uses the access point name, determining, by the terminal, that a data connection is unable to be set up with the server.

2. The terminal triggering method according to claim 1, wherein, after the determining that a data connection is unable to be set up with the server, the method further comprises:
sending, a timer and an application list of an application that uses the access point name and are in the terminal to the server;
sending only the timer to the server.

3. The terminal triggering method according to claim 2, wherein, the timer is the back off timer or the timer is generated according to the back off timer.

4. A terminal triggering method, wherein the method is implemented by a mobility management entity and the method comprises:
receiving (S110) from a machine type communications-inter working function entity, a trigger request message sent by a server to a terminal, where the trigger request message carries application information of an application that needs to be triggered;
determining (S111) whether the terminal is unable to set up a data connection with the server;
in a case where the terminal is unable to set up a data connection with the server, sending (S112) indicating information to the server, so that the server suspends sending a subsequent trigger request message to the terminal;
in a case where the terminal is able to set up a data connection with the server the mobility, responding to the trigger request message and forwarding the trigger request message to the terminal;
wherein determining whether the terminal is unable to set up a data connection with the server includes:
having a case where a back off timer associated with the name of an access point is running on the mobility management entity and the mobility management entity determines that the terminal needs to set up a data connection with the server, and in this case, both: determining whether the application triggered by the trigger request message uses the access point name; and
in a case where the application triggered by the trigger request message uses the access point nam, determining, by the mobility management entity, that the terminal is unable to set up a data connection with the server.

5. The terminal triggering method according to claim 4, wherein, after the determining that a data connection is unable to be set up with the server, the method further comprises:
sending a timer and an application list of an application that uses the access point name and are in the terminal to the server;
alternatively, sending only the timer to the server.

6. The terminal triggering method according to claim 5, wherein, the timer is the back off timer or the timer is generated according to the back off timer.

7. A terminal (11), comprising modules for implementing a terminal triggering method according to any one of claims 1-3.

8. A network device (10), comprising modules for implementing the method according to any one of claims 4-6.

## Patentansprüche

1. Verfahren zum Auslösen eines Endgeräts, wobei das Verfahren durch ein Endgerät ausgeführt wird und das Verfahren Folgendes umfasst:
Erhalten (S310) einer Auslöseanforderungsnachricht, die von einem Server an das Endgerät gesendet wird, von einer "Mobility Management Entity", wobei die Auslöseanforderungsnachricht Anwendungsinformationen einer Anwendung, die ausgelöst werden muss, trägt;
Bestimmen (S311), gemäß der Auslöseanforderungsnachricht, der Notwendigkeit der Herstellung einer Datenverbindung mit dem Server;
Bestimmen (S311), ob eine Datenverbindung mit dem Server nicht hergestellt werden kann;
Senden (S312) einer anzeigenden Information unter Verwendung der "Mobility Management Entity" an den Server, falls das Endgerät bestimmt, dass eine Datenverbindung mit dem Server nicht hergestellt werden kann, damit der Server das Senden einer nachfolgenden Auslöseanforderungsnachricht an das Endgerät aussetzt;
Antworten auf die Auslöseanforderungsnachricht, falls das Endgerät bestimmt, dass eine Datenverbindung mit dem Server hergestellt werden kann;
wobei das Bestimmen (S311), dass eine Datenverbindung mit dem Server nicht hergestellt werden kann, konkret Folgendes umfasst:
das Vorliegen eines Falles, in dem das Endgerät eine Datenverbindung mit dem Server herstellen muss und an dem Endgerät ein "Backoff-Timer", der mit einer Zugangspunktbezeichnung in Zusammenhang steht, läuft, und
in diesem Fall sowohl
Bestimmen, ob die Anwendung, die durch die Auslöseanforderungsnachricht ausgelöst wird, die Zugangspunktbezeichnung verwendet; als auch,
falls die Anwendung, die durch die Auslöseanforderungsnachrichtung ausgelöst wird, die Zugangspunktbezeichnung verwendet, Bestimmen, durch das Endgerät, dass eine Datenverbindung mit dem Server nicht hergestellt werden kann.

2. Verfahren zum Auslösen eines Endgeräts nach Anspruch 1, wobei das Verfahren nach der Bestimmung, dass eine Datenverbindung mit dem Server nicht hergestellt werden kann, ferner Folgendes umfasst:
Senden eines Timers und einer Anwendungsliste einer Anwendung, die die Zugangspunktbezeichnung verwenden und in dem Endgerät vorhanden sind, an den Server;
Senden nur des Timers an den Server.

3. Verfahren zum Auslösen eines Endgeräts nach Anspruch 2, wobei der Timer der "Backoff-Timer" ist oder der Timer gemäß dem "Backoff-Timer" erzeugt wird.

4. Verfahren zum Auslösen eines Endgeräts, wobei das Verfahren durch eine "Mobility Management Entity" ausgeführt wird und das Verfahren Folgendes umfasst:
Erhalten (S110) einer Auslöseanforderungsnachricht, die durch einen Server an ein Endgerät gesendet wird, von einer "Machine Type Communications Interworking Function Entity", wobei die Auslöseanforderungsnachricht eine Anwendungsinformation einer Anwendung, die ausgelöst werden muss, trägt;
Bestimmen (S111), ob das Endgerät nicht in der Lage ist, eine Datenverbindung mit dem Server herzustellen,
falls das Endgerät nicht in der Lage ist, eine Datenverbindung mit dem Server herzustellen, Senden (S 112) einer anzeigenden Information an den Server, damit der Server das Senden einer nachfolgenden Auslöseanforderungsnachricht an das Endgerät aussetzt;
falls das Endgerät in der Lage ist, eine Datenverbindung mit dem Server herzustellen,
Antworten der "Mobility Management Entity" auf die Auslöseanforderungsnachricht und Senden der Auslöseanforderungsnachricht an das Endgerät;
wobei das Bestimmen, ob das Endgerät nicht in der Lage ist, eine Datenverbindung mit dem Server herzustellen, Folgendes umfasst:
Vorliegen eines Falles, in dem ein "Backoff-Timer", der mit der Bezeichnung eines Zugangspunkts in Zusammenhang steht, an der "Mobility Management Entity" läuft und die "Mobility Management Entity" bestimmt, dass das Endgerät eine Datenverbindung mit dem Server herstellen muss, und
in diesem Fall sowohl
Bestimmen, ob die Anwendung, die durch die Auslöseanforderungsnachricht ausgelöst wird, die Zugangspunktbezeichnung verwendet; als auch,
falls die Anwendung, die durch die Auslöseanforderungsnachrichtung ausgelöst wird, die Zugangspunktbezeichnung verwendet, Bestimmen, durch die "Mobility Management Entity", dass das Endgerät nicht in der Lage ist, eine Datenverbindung mit dem Server herzustellen.

5. Verfahren zum Auslösen eines Endgeräts nach Anspruch 4, wobei das Verfahren nach der Bestimmung, dass eine Datenverbindung mit dem Server nicht hergestellt werden kann, ferner Folgendes umfasst;
Senden eines Timers und einer Anwendungsliste einer Anwendung, die die Zugangspunktbezeichnung verwenden und in dem Endgerät vorhanden sind, an den Server;
alternativ, Senden nur des Timers an den Server.

6. Verfahren zum Auslösen eines Endgeräts nach Anspruch 5, wobei der Timer der "Backoff-Timer" ist oder der Timer gemäß dem "Backoff-Timer" erzeugt wird.

7. Endgerät (11), umfassend Module zur Ausführung eines Verfahrens zum Auslösen eines Endgeräts nach einem der Ansprüche 1 bis 3.

8. Netzwerkvorrichtung (10), umfassend Module zur Ausführung des Verfahrens nach einem der Ansprüche 4 bis 6.

## Revendications

1. Procédé de déclenchement de terminal, le procédé étant mis en oeuvre par un terminal, le procédé comprenant les étapes consistant à :
recevoir (S310), d'une entité de gestion de mobilité, un message de demande de déclenchement envoyé par un serveur à un terminal, le message de demande de déclenchement contenant des informations d'application d'une application qui doit être déclenchée ;
déterminer (S311), d'après le message de demande de déclenchement, la nécessité d'établir une connexion de données avec le serveur ;
déterminer (S311) s'il y a impossibilité d'établir une connexion de données avec le serveur ;
envoyer (S312) des informations d'indication au serveur en utilisant l'entité de gestion de mobilité dans le cas où le terminal détermine qu'il y a impossibilité d'établir une connexion de données avec le serveur, afin que le serveur suspende l'envoi d'un message de demande de déclenchement suivant au terminal ;
répondre au message de demande de déclenchement dans le cas où le terminal détermine qu'il est possible d'établir une connexion de données avec le serveur ;
dans lequel procédé la détermination (S311) de l'impossibilité d'établir une connexion de données avec le serveur comprend spécifiquement les étapes consistant à :
avoir un cas où le terminal doit établir une connexion de données avec le serveur, et un temporisateur de retrait associé à un nom de point d'accès est en train de fonctionner sur le terminal ; et
dans ce cas, effectuer les deux actions suivantes :
déterminer si l'application déclenchée par le message de demande de déclenchement utilise le nom de point d'accès ; et
dans le cas où l'application déclenchée par le message de demande de déclenchement utilise le nom de point d'accès, déterminer, par le terminal, qu'il y a impossibilité d'établir une connexion de données avec le serveur.

2. Procédé de déclenchement de terminal selon la revendication 1, dans lequel, après la détermination de l'impossibilité d'établir une connexion de données avec le serveur, le procédé comprend également les étapes consistant à :
envoyer au serveur un temporisateur et une liste d'applications d'une application qui utilise le nom de point d'accès, qui sont dans le terminal ;
n'envoyer au serveur que le temporisateur.

3. Procédé de déclenchement de terminal selon la revendication 2, dans lequel le temporisateur est le temporisateur de retrait ou dans lequel le temporisateur est généré à partir du temporisateur de retrait.

4. Procédé de déclenchement de terminal, le procédé étant mis en oeuvre par une entité de gestion de mobilité et le procédé comprenant les étapes consistant à :
recevoir (S110), d'une entité de fonction d'interfonctionnement de communications de type machine, un message de demande de déclenchement envoyé par un serveur à un terminal, le message de demande de déclenchement contenant des informations d'application d'une application qui doit être déclenchée ;
déterminer (S111) si le terminal est dans l'impossibilité d'établir une connexion de données avec le serveur ;
dans le cas où le terminal est dans l'impossibilité d'établir une connexion de données avec le serveur, envoyer (S112) des informations d'indication au serveur, afin que le serveur suspende l'envoi d'un message de demande de déclenchement suivant au terminal ;
dans le cas où le terminal est capable d'établir une connexion de données avec le serveur, la entité de gestion de mobilité répondre au message de demande de déclenchement et faire suivre le message de demande de déclenchement au terminal ;
dans lequel procédé la détermination de l'impossibilité pour le terminal d'établir une connexion de données avec le serveur comprend les étapes consistant à :
avoir un cas où un temporisateur de retrait associé au nom d'un point d'accès est en train de fonctionner sur l'entité de gestion de mobilité et où l'entité de gestion de mobilité détermine que le terminal doit établir une connexion de données avec le serveur, et
dans ce cas, effectuer les deux actions suivantes :
déterminer si l'application déclenchée par le message de demande de déclenchement utilise le nom de point d'accès ; et
dans le cas où l'application déclenchée par le message de demande de déclenchement utilise le nom de point d'accès, déterminer, par l'entité de gestion de mobilité, que le terminal est dans l'impossibilité d'établir une connexion de données avec le serveur.

5. Procédé de déclenchement de terminal selon la revendication 4, dans lequel, après la détermination de l'impossibilité d'établir une connexion de données avec le serveur, le procédé comprend également les étapes consistant à :
envoyer au serveur un temporisateur et une liste d'applications d'une application qui utilise le nom de point d'accès, qui sont dans le terminal ;
en variante, n'envoyer au serveur que le temporisateur.

6. Procédé de déclenchement de terminal selon la revendication 5, dans lequel le temporisateur est le temporisateur de retrait ou dans lequel le temporisateur est généré à partir du temporisateur de retrait.

7. Terminal (11), comprenant des modules destinés à la mise en oeuvre d'un procédé de déclenchement de terminal selon l'une quelconque des revendications 1 à 3.

8. Dispositif de réseau (10), comprenant des modules destinés à la mise en oeuvre du procédé selon l'une quelconque des revendications 4 à 6.
